# FASCICULE DE BREVET EUROPEEN

(11) **EP 3 853 106 B1**
(45) Date de publication et mention de la délivrance du brevet: **07.06.2023**
(21) Numéro de dépôt: 19773477.5
(22) Date de dépôt: 27.09.2019
(51) Int. Cl.: B62B 5/00, B62K 15/00, B62B 13/00, B62M 27/02, B62M 6/90, B62M 6/40, B62M 27/00, B62K 11/14, B62B 17/06, B62B 13/16, B62B 13/04

(54) **VÉHICULE MOTORISÉ**
MOTORISIERTES FAHRZEUG
MOTORISED VEHICLE

(30) Priorité: 27.09.2018 FR 1858913
(43) Date de publication de la demande: 28.07.2021
(73) Titulaire: Moonbikes Motors, 75018 Paris (FR)
(72) Inventeur: MURON, Nicolas, 75018 PARIS (FR)
(74) Mandataire: Alatis
(86) Numéro de dépôt international: PCT/EP2019/076316
(87) Numéro de publication internationale: WO 2020/065071

(56) Documents cités:
- DE-A1- 1 909 511
- DE-U1-202018 001 827
- FR-A5- 2 165 188
- US-A- 4 442 913
- US-A- 5 904 217

## Description

La présente invention concerne un véhicule comprenant une partie avant munie d'au moins un patin directeur destiné à être dirigé par un guidon, une partie arrière comprenant un châssis solidaire d'un moyen de propulsion de type chenille et entraîné par un mécanisme de transmission configuré pour être mû par un moteur. En particulier, l'invention concerne plus généralement un véhicule léger, nomade et tout terrain (neige, boue, sable, terre, goudron) permettant de faciliter la mobilité individuelle (tel que le grand public), notamment en milieu enneigé.

Le déplacement individuel en milieu enneigé est traditionnellement effectué grâce à des véhicules de type « scooter des neiges », aussi appelé « motoneige ».

Le scooter des neiges conventionnel est un véhicule motorisé, typiquement mû à l'aide d'une ou deux chenilles, et équipé de skis pour assurer la direction du véhicule. C'est un véhicule puissant (puissance du moteur habituellement supérieure à 90kW) et adapté aux longues distances et au transport de lourdes charges. Il est traditionnellement équipé d'un moteur thermique. Le scooter des neiges moderne comporte généralement une chenille unique de surface de contact importante (0,8 m²) conférant au véhicule une poussée adaptée à la puissance de son moteur. Ses skis avant, sa large chenille (généralement 50 cm) et les dimensions de l'assise en font un véhicule confortable, stable et adapté aux longues distances.

La puissance du scooter des neiges, son confort et sa stabilité adaptés aux longues distances en font un engin lourd (plus de 230 kg pour la plupart des modèles) et de grande dimensions (plus de 3m de long).

Son moteur thermique en fait un engin qui est source de pollution de l'air et sonore, ce qui lui confère généralement une image négative. De surcroît, les scooters des neiges comportent un nombre important de pièces et sont onéreux à produire.

Par sa puissance, ses dimensions et la pollution qu'il génère, le scooter des neige « conventionnel » n'est pas adapté à la mobilité individuelle en station de sports d'hiver et plus généralement en milieu urbain. Il n'est par exemple pas adapté au développement d'un « parc de scooter des neige » en libre-service destiné au grand public afin de faciliter la mobilité individuelle en station de sport d'hiver.

Par sa masse et ses dimensions, le scooter des neiges n'est pas un engin nomade. Par ces caractéristiques il n'est pas adapté au transport par son utilisateur autrement que sur une remorque tractée par un véhicule ou dans un camion. Par ces caractéristiques il n'est pas facilement transportable, ni même adapté à une commercialisation par correspondance.

Un prototype de scooter des neiges à moteur électrique est actuellement en développement par certaines sociétés. Les prototypes connus en cours de développement sont généralement présentés comme comportant la plupart des caractéristiques des scooters des neiges « conventionnels » (masse, dimensions, design), à la seule différence du seul moteur électrique.

Il est connu des scooters des neiges à moteur électrique présentant des dimensions réduites. Ce type véhicule est généralement basé sur un cadre préexistant de scooter des neige « conventionnel » junior (i.e. pour enfant), et équipé d'un moteur électrique. Outre le moteur électrique, ce type de véhicule comporte la plupart des caractéristiques des scooters des neiges « conventionnels » dits juniors (masses dimensions, design).

Il est également connu des systèmes de conversion pour adapter des motocyclettes à la neige, ces systèmes étant composés d'une chenille étroite et d'un monoski. Les motocyclettes compatibles sont généralement des motocyclettes à moteur thermique uniquement. Bien que plus légère et moins encombrante qu'un scooter des neiges « conventionnels », une motocyclette ainsi équipée semble difficilement transportable par un utilisateur autrement que dans un camion ou par une remorque.

Les documents FR 2165188 et US 5,904,217 décrivent chacun un véhicule motorisé selon l'art antérieur.

L'objet de la présente invention est de proposer une solution qui corresponde à une évolution de ces types de véhicules motorisés connus permettant de résoudre tout ou partie des problématiques précitées et notamment de proposer un véhicule motorisé nomade, facilitant la mobilité individuelle et facile à transporter.

En d'autres termes, le but de l'invention est de proposer un tel type de véhicule motorisé de conception simplifiée qui, par sa masse réduite, son faible encombrement et sa conception, est aisément transportable par son utilisateur, facile d'utilisation, et adapté à une circulation en milieu urbain ou non urbain

À cet effet, l'invention concerne un véhicule motorisé selon la revendication 1. Le véhicule motorisé peut comprendre mécanique pour relier mécaniquement la partie avant avec la partie arrière, la liaison mécanique étant amovible.

Il est entendu par une liaison mécanique dite « amovible » une liaison mécanique avec une possibilité de démontage manuel sans détruire son mode d'assemblage et garantir ainsi l'intégrité de la liaison mécanique.

Il est également entendu par une telle liaison, une liaison mécanique ne nécessitant pas l'utilisation d'un outillage compliqué pour son assemblage et/ou son désassemblage, ni une connaissance spécifique pour son usage.

Grâce à une telle combinaison de caractéristique, le véhicule motorisé est facilement démontable en deux parties au moins, ceci d'un simple geste ou avec un faible nombre d'opérations. Par ailleurs, une fois démonté le véhicule présente un encombrement réduit.

Selon une caractéristique avantageuse, le véhicule présente dans une position de rangement, c'est-à-dire démonté et/ou plié, une mesure combinée d'une longueur et d'une circonférence inférieure ou égale à 419 cm et, de préférence encore, un poids inférieur à 70kg. Grâce à une telle caractéristique, le véhicule peut être commercialisé via une plate-forme Internet et vendu à distance. En effet ces dimensions sont considérées comme des dimensions standardisées pour des colis destinés à être transportés par des sociétés de transport spécialisées telles que UPS.

Selon une caractéristique technique particulière, le véhicule comprend un moyen de préhension configuré pour permettre le montage et le démontage de la liaison mécanique manuellement, en particulier sans l'aide d'outil spécifique.

Le moyen de préhension peut soit être directement attaché à la liaison mécanique de sorte que son simple déplacement permette le montage et le démontage de ladite liaison. Un tel moyen de préhension peut être par exemple un levier associé à une came permettant de mettre en tension, pour le serrage, ou hors tension, pour le desserrage, l'élément à serrer de type collier. Ce type de fixation est communément appelé « attache rapide ».

Toutefois le moyen de préhension peut être désolidarisable et déporté de la liaison, par exemple pour éviter le démontage du véhicule par une personne mal intentionnée qui voudrait tenter de le voler. Ce moyen de préhension présente alors la forme d'un outil simple, par exemple de type clé.

Alternativement ou en complément, la liaison mécanique amovible comprend un moyen de fixation mécanique amovible, par exemple de type vis-écrou, qui peut être démonté avec un outillage simple, tel qu'un tournevis standard.

De préférence, le moteur est un moteur électrique alimenté par une batterie.

Selon une caractéristique technique particulière, la partie avant comprend une tringlerie formant cadre, la liaison mécanique amovible reliant la tringlerie de la partie avant au châssis de la partie arrière. De cette manière, le véhicule est léger et compact.

Avantageusement, la partie avant comporte un bras avant, par exemple de type fourche, relié d'un côté au(x) patin(s) directeur(s) et de l'autre côté au guidon, la tringlerie étant reliée audit bras avant de façon amovible de sorte à être démontable.

Selon une caractéristique, la partie avant et/ou la tringlerie sont démontables en une pluralité de pièces permettant d'être démontées puis conditionnées sous forme de kit pour leur transport.

Alternativement ou en complément, la tringlerie et/ou le bras avant comprennent de préférence des articulations internes de sorte à être pliés une fois démontés.

Grâce à ces caractéristiques, le véhicule est compact et, une fois démonté, peut être réduit à un volume limité

Selon une caractéristique technique, la liaison mécanique amovible entre les parties avant et arrière est articulée de sorte à assurer une liaison pivot d'axe horizontal s'étendant transversalement par rapport à un axe longitudinal de référence du véhicule. Une telle caractéristique permet d'améliorer la franchissabilité et la maniabilité du véhicule motorisé.

De préférence cette liaison pivot est amortie, par exemple par un moyen d'emmagasinement d'énergie reliant les parties avant et arrière.

De préférence encore, le guidon comporte des moyens de commande électrique du moteur et de frein et le véhicule comprend un dispositif de liaison électrique entre la partie avant et la partie arrière. Il comprend également un dispositif de liaison mécanique démontable pour le câble de frein, entre la partie avant et arrière.

Avantageusement, la partie arrière est autosupportée, c'est-à-dire qu'une fois la partie avant et la partie arrière démontée au niveau de la liaison mécanique amovible, la partie arrière est stable et ne tombe pas. De cette manière le démontage est facilité pour une seule personne. En complément, la partie arrière peut être munie d'un dispositif de stabilisation telle une béquille ou des roulettes de stabilisation.

Selon l'invention, le moyen de propulsion est supporté par un bogie, le bogie comportant un bogie supérieur solidaire du châssis et un bogie inférieur reliés ensemble par un mécanisme de suspension, le bogie inférieur présentant au moins un degré de liberté par rapport au bogie supérieur.

Cette caractéristique permet d'améliorer la franchissabilité et la maniabilité du véhicule motorisé.

Ce degré de liberté est de préférence une rotation autour d'un axe instantané de rotation aussi appelé « CIR », lequel est situé de préférence longitudinalement par rapport au véhicule dans une zone située au droit d'une surface de contact du moyen de propulsion avec le sol. L'axe instantané de rotation est de préférence situé sur une droite dite « ligne d'effort chenille » colinéaire à la résultante des efforts de propulsion exercée par le moteur-roue sur la chenille.

Selon l'invention, le moteur est logé dans une roue du mécanisme de transmission formant une roue d'entraînement du moyen de propulsion.

L'ensemble composé du moteur et du mécanisme de transmission peut également être appelé moteur-barbotin.

L'intégration d'un moteur dans une roue du mécanisme de transmission permet une compacité améliorée et une conception simplifiée tout en garantissant un entraînement efficace du moyen de propulsion et améliore le rendement mécanique du train chenillé.

Ces avantages conférés par le moteur intégré dans une roue d'entraînement, aussi appelé moteur-roue sont indépendants de la liaison mécanique amovible pour relier la partie avant avec la partie arrière.

La combinaison de ces deux caractéristiques est toutefois avantageuse pour en combiner tous les avantages.

Ainsi, un véhicule motorisé selon l'invention comportant un moteur-roue formant roue d'entraînement tel que précité peut comporter une liaison mécanique amovible pour relier la partie avant avec la partie arrière telle que décrite ci-avant ainsi que toutes les caractéristiques qui en dépendent.

Selon l'invention, la roue du mécanisme de transmission formant une roue d'entraînement du moyen de propulsion est solidaire du bogie inférieur, à l'arrière de celui-ci. Le freinage du véhicule est assuré par l'intermédiaire d'un frein tel qu'un frein à disque solidaire de la partie tournante du moteur-roue ou moteur-barbotin, et dont les mâchoires sont solidaires d'un point fixe du bogie inférieur.

Le réglage statique de la tension de la chenille se fait par translation horizontale du moteur-roue grâce à des trous oblongs au niveau du bogie inférieur. Un mécanisme de blocage tel un système vis/écrou permet le blocage en translation des axes moteur à la position désirée. Un mécanisme similaire (trou oblong + vis/écrou) est installé pour régler la position des mâchoires de frein par rapport au boggie inférieur.

De préférence encore, les bogies inférieur et supérieur sont reliés ensemble par au moins une suspension et une bielle.

Dans une configuration technique particulière, les bogies inférieur et supérieur sont reliés ensemble par deux suspensions (une suspension avant, une suspension arrière) et au moins une bielle.

Dans une configuration technique particulière, le bogie est configuré pour que la chenille soit triangulaire, c'est à dire présentant trois renvois, la roue formant moteur-roue étant solidaire du bogie inférieur, à l'arrière de celui-ci. Une roue supplémentaire peut-être placée, en attente, à l'arrière du boggie supérieur.

Selon un mode de réalisation, la roue du mécanisme de transmission à l'intérieure de laquelle est logé le moteur comprend sur sa circonférence, une pluralité d'alvéoles séparées par des raidisseurs, les raidisseurs étant de préférence inclinés par rapport à une direction radiale de la roue.

Selon un mode de réalisation, la roue du mécanisme de transmission à l'intérieure de laquelle est logé le moteur est portée par un axe relié au bogie inférieur, au moins un joint d'amortissement étant disposé entre l'axe de la roue et le bogie inférieur, de préférence accompagné d'au moins une plaquette d'un matériau plus dur que le joint.

Selon un mode de réalisation, le châssis comporte au moins quatre demi trous oblongs configurés pour recevoir des portions, de préférences situées aux extrémités, d'au moins deux axes portés par le bogie, de préférence par le bogie supérieur. Ces demis trous oblongs sont de préférence ouverts vers le bas et sont disposés de part et d'autre deux à deux du châssis, un axe du bogie étant relié à deux demi trous oblongs au voisinage de ses extrémités.

Par sa conception, le scooter des neiges selon l'invention est également aisément démontable et re-montable, pour en faciliter le transport par son utilisateur ou sa commercialisation par correspondance.

En résumé, l'invention propose un véhicule motorisé de type motoneige qui, par sa conception est aisément démontable et re-montable, pour en faciliter le transport par son utilisateur ou sa commercialisation par correspondance, et dont le transport peut être effectué par exemple dans une valise à roulettes, voire même un colis, dans le coffre d'une voiture, dans un ascenseur, en télécabine, ou en aéronef léger.

D'autres caractéristiques et avantages de l'invention ressortiront à la lecture de la description qui suit, donnée uniquement à titre d'exemple, en référence aux figures annexées, qui illustrent :
- figure 1, une vue en perspective d'un véhicule motorisé ne faisant pas partie de l'invention, représenté avec un conducteur ;
- figures 2A, 2B et 2C, des vues de profil d'un véhicule motorisé selon la figure 1
- figure 3, une vue de côté d'un véhicule motorisé ne faisant pas partie de l'invention
- figure 4, une vue en perspective d'un véhicule motorisé selon le mode de réalisation de la figure 3 ;
- figure 5, une vue de face d'un véhicule motorisé selon le mode de réalisation de la figure 3 ;
- figure 6, une vue d'un véhicule motorisé selon ce mode de réalisation, dans une configuration de transport ;
- figure 7, une vue d'une partie arrière d'un véhicule motorisé selon ce mode de réalisation, dans une configuration de transport ;
- figures 8, 9, 10, 11, 12, 13, 14, 15, 16, 17, 18, 19 et 20, des figures détaillées de différentes parties du véhicule motorisé selon ce mode de réalisation ;
- figure 21, un schéma de principe d'un véhicule motorisé selon un mode de réalisation présentant un bogie non articulé ne faisant pas partie de l'invention ;
- figures 22A et 22B, des schémas de deux configurations de suspensions avant d'un véhicule selon des modes de réalisations distincts ne faisant pas partie de l'invention, le véhicule présentant un bogie non articulé ;
- figures 23A, 23B et 23C, des schémas de principe d'un véhicule motorisé selon un mode de réalisation présentant un bogie articulé, représenté avec trois profils différents du sol ;
- figures 24A, 24B et 24C, des schémas de trois configurations de mécanisme de suspension entre un bogie inférieur et un bogie supérieur articulé d'un véhicule selon des modes de réalisations distincts ;
- figures 25A, 25B, 25C, 25D et 25 E, des vues de côté d'un véhicule motorisé selon le mode de réalisation des figures 1 et 2, dans des profils différents de cassures de pentes du sol sur lequel le véhicule évolue ;
- figures 26A et 26B, des schémas de deux configurations de suspensions avant d'un véhicule selon des modes de réalisations distincts ;
- figures 27A et 27B, une vue de face et de côté d'un moteur-roue ou moteur-barbotin selon un mode de réalisation ;
- figure 28, une vue de côté d'un véhicule motorisé ne faisant pas partie de l'invention avec un moteur-roue dans lequel le moteur-roue est porté par un bogie supérieur, à l'avant de celui-ci ;
- figure 29, une vue de côté d'un véhicule motorisé selon l'invention avec un moteur-roue dans lequel le moteur-roue est porté par un bogie inférieur, à l'arrière de celui-ci ;
- figures 30, 31, 32, 33, 34 et 35, des vues générales et détaillées d'un véhicule motorisé selon l'invention;
- figures 36A, 36B et 36C, des illustrations schématiques d'un véhicule motorisé selon un mode de réalisation dans des positions différentes entre les bogies inférieur et supérieur ;
- figures 37A et 37B, des illustrations schématiques d'un véhicule motorisé selon un mode de réalisation dans des positions différentes selon l'état de la suspension arrière ;
- figures 38 et 39, des vues de côté et en perspective d'un véhicule motorisé ne faisant pas partie de l'invention
- figures 40A, 40B et 40C, des figures d'une véhicule motorisé selon différents usages,
- figures 41A et 41B, des figures d'un véhicule selon un autre mode de réalisation et un détail du bogie.

Dans la description et les revendications, pour clarifier la description et les revendications, on adoptera à titre non limitatif la terminologie longitudinal, vertical et transversal en référence au trièdre L, V, T indiqué aux figures.

Sur l'ensemble de ces figures, des références identiques ou analogues représentent des organes ou ensembles d'organes identiques ou analogues.

De plus, les termes « supérieur », « inférieur », « vertical » et leurs dérivés font référence à la position ou à l'orientation d'un élément ou d'un composant, cette position ou cette orientation étant considérée lorsque le véhicule motorisé est positionné sur le sol en configuration d'utilisation.

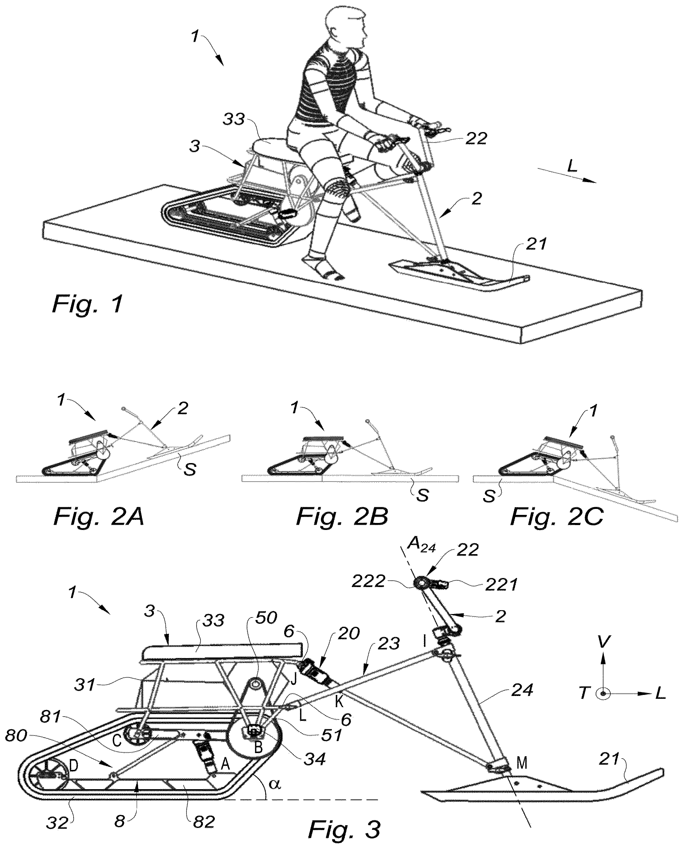

On a représenté à la figure 1 une vue schématique d'un véhicule motorisé 1 selon un mode de réalisation ne faisant pas partie de l'invention.

Le véhicule motorisé 1 comprend une partie avant 2 munie d'au moins un patin directeur 21 destiné à être dirigé par un guidon 22, une partie arrière 3 comprenant un châssis 31 solidaire d'un moyen de propulsion 32 de type chenille et entraîné par un mécanisme de transmission 4 configuré pour être mû par un moteur 5 tel qu'un moteur 5 électrique alimenté par une batterie (non illustrée).

Le véhicule motorisé 1 comprend une liaison mécanique 6 pour relier mécaniquement la partie avant 2 avec la partie arrière 3, la liaison mécanique 6 étant amovible.

De cette manière, le véhicule motorisé 1 présente deux parties avant 2 et arrière 3 dissociables, mais pouvant être simplement assemblées mécaniquement et reliées électriquement (sans outillage particulier, sans effort, avec un faible nombre d'opérations).

De préférence, chacune de ces parties avant 2 et arrière 3 présente un encombrement et une masse réduits de sorte qu'elles soient aisément manipulables par l'utilisateur. Ainsi le véhicule motorisé 1 est facilement transportable à pieds via des roulettes, dans le coffre d'une voiture, dans un ascenseur, en télécabine, ou en aéronef léger, voire dans un colis.

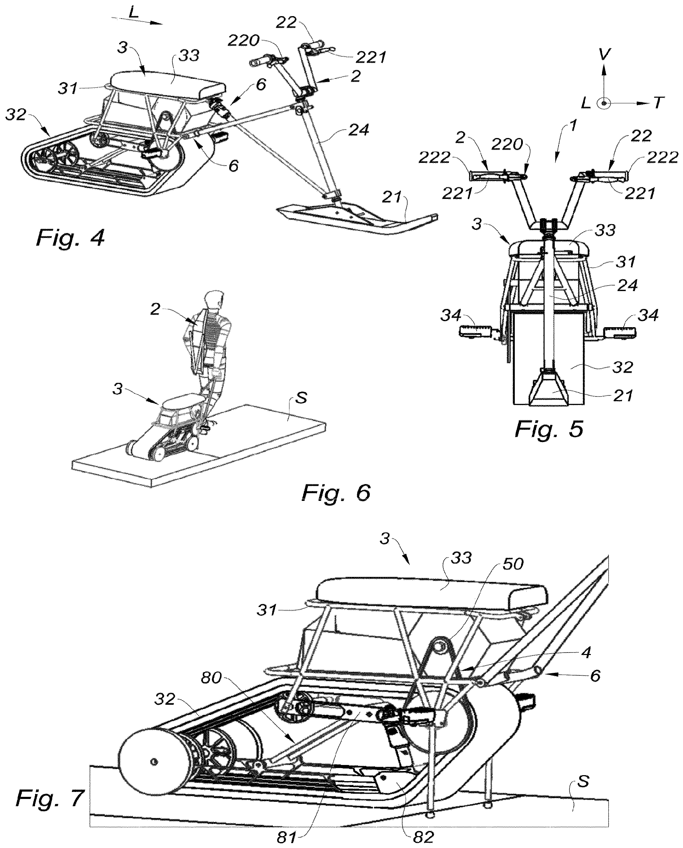

Cette configuration est illustrée en particulier sur les figures 6 et 7. La partie 2 avant est pliable et est composée d'un bras avant 24 solidaire d'une tringlerie 23 articulées de sorte à pouvoir être pliée et, par une configuration présentant essentiellement un ensemble d'éléments tubulaires, son encombrement est réduit de sorte à pouvoir être plié dans un simple sac à dos. On notera que la partie avant peut également, alternativement ou en combinaison être démontable.

L'assemblage mécanique entre la partie avant 2 et partie arrière 3 peut se faire par différents moyens connus, par exemple par des goupilles ou autres éléments d'assemblage permettant de réaliser sans outillage spécifiques une liaison mécanique entre des pièces, au plus à l'aide d'un outillage standard, par exemple dans le cas d'un assemblage de type vis-écrou aussi appelé boulon. Cette liaison mécanique 6 sera décrite en détail ci-après.

La partie avant 2 comporte un bras avant 24, par exemple de type mono-bras comme illustré sur les figures ou de type fourche, le bras avant 24 étant relié d'un côté au patin directeur 21 et de l'autre côté au guidon 22.

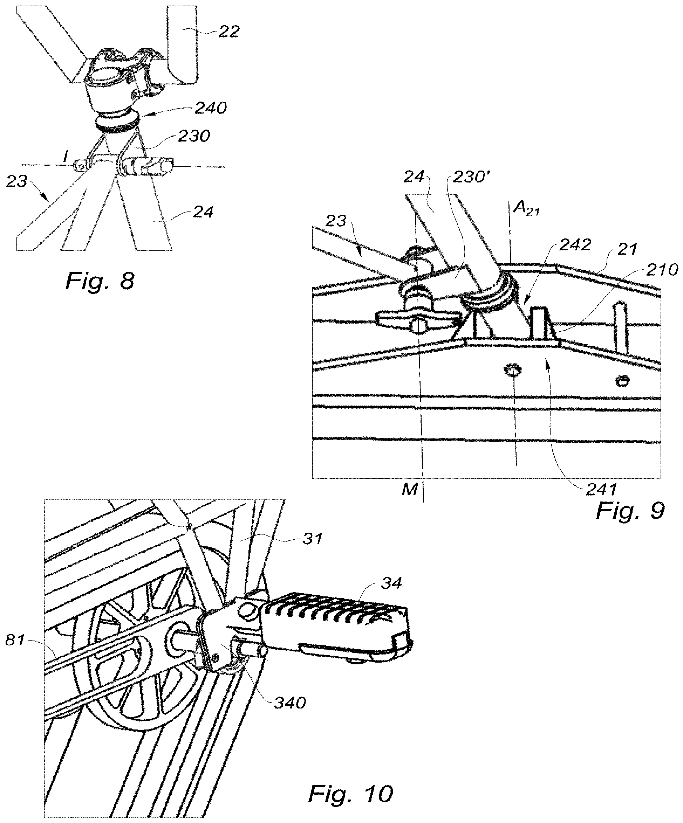

Le bras avant 24 comporte une potence 240 située à son extrémité supérieure et fixée par emmanchement démontable, et permettant la liaison au guidon 22 (voir la figure 8).

Le guidon 22 est encastré à la potence 240 et donc au bras avant 24 par serrage. Le dispositif de serrage du guidon à la potence du bras avant 24 est de préférence démontable facilement, c'est-à-dire sans outil, tel qu'un collier ou clip de serrage.

Le bras avant 24 comporte une extrémité inférieure présentant un élément de liaison 241 avec le patin directeur 21 participant à la liaison pivot 242 avec ce dernier.

Cette liaison pivot 242 est de préférence amovible c'est-à-dire démontable facilement afin de pouvoir aisément désolidariser le patin directeur 21 du bras avant 24.

Le patin directeur 21 peut comporter typiquement un monoski, et plus généralement au moins un ski 21. Une solution de type monoski est préférée en ce qui concerne la compacité réduite de la partie avant 2 et une réactivité et précision améliorées de la direction tandis qu'une solution à deux skis 21 peut être retenue pour conférer une stabilité améliorée au véhicule 1.

Le patin directeur 21 permet la direction et la flottaison en milieu meuble du véhicule motorisé 1, tel que sur de la neige poudreuse, du sable ou de la boue. La rotation du guidon 22 est communiquée au patin directeur 21 par le bras avant 24 formant colonne de direction, en particulier par une rotation selon l'axe principale A₂₄ suivant lequel s'étend le bras avant 24 (voir la figure 3).

La rotation du patin directeur 21 par rapport au bras avant 24 autour d'un horizontal, en particulier un axe A₂₁ parallèle à l'axe transversal T du véhicule 1, est laissée libre, mais peut être limitée sur son étendue et/ou amortie par un dispositif d'amortissement 210.

Dans une configuration technique, l'amortissement de la rotation entre le patin directeur 21 et le bras avant 24 est réalisé par un bloc de mousse 210 solidaire dudit patin directeur 21, et entrant en collision avec le bras directeur 24 au-delà d'une certaine course angulaire. Cela est plus léger que d'ajouter un vérin d'amortissement entre le ski 21 et la colonne de direction 24, et facilite le démontage du patin directeur 21.

Le patin directeur 21, à savoir le ou les skis, est équipé de préférence d'un rail longitudinal (non illustré) sur sa surface inférieure afin d'augmenter la prise au sol S.

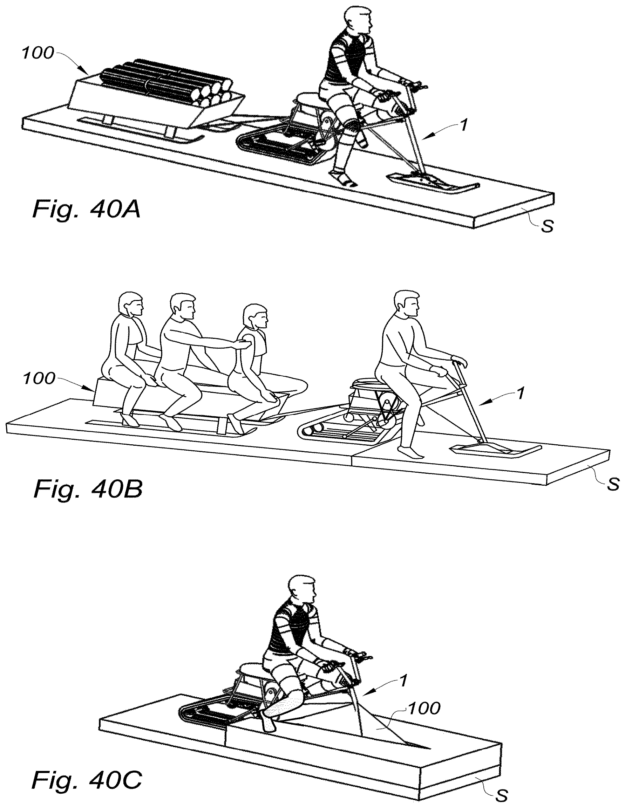

La partie avant 2, par exemple le bras avant 24 ou le patin directeur 21, présente de préférence une interface de fixation pour assurer sa fixation à un module optionnel 100 à l'avant du véhicule, tel qu'un versoir à l'avant, utilisé pour pousser la neige sur le bas-côté assurant ainsi une fonction de chasse-neige (voir la figure 40C). L'axe A₂₁ de la liaison entre le patin directeur 21 et le bras avant 24 formant colonne de direction est amovible et démontable sans outil, ici de type goupille, et sécurisé.

La partie avant 2 comprend une tringlerie 23 formant cadre, la tringlerie 23 étant solidaire du bras avant 24 et articulée par rapport audit bras avant 24. Ces articulations permettent notamment, une fois les parties avant 2 et arrière 3 démontées, de permettre un pliage de la partie avant 2 pour la rendre compacte en position pliée. On notera que la partie avant peut être, de façon alternative ou complémentaire, être démontable en plusieurs pièces.

Les articulations de la tringlerie 23 sont formées par des pivots d'axes horizontaux parallèles à l'axe transversal T du véhicule 1.

De façon générale, la tringlerie 23 est formée d'un ensemble d'éléments tubulaires, en particulier de bielles, la partie avant 2 étant en outre amortie par un amortisseur 20, cet ensemble ayant principalement deux fonctions :
- d'une part relier mécaniquement le patin directeur 21, le bras avant 24 formant système de direction et le guidon 22 à la partie arrière 3 via la tringlerie 23, et,
- d'autre part, participer à la suspension (amortisseur) et à la cinématique du véhicule 1.

Le bras avant 24 comporte une colonne montée rotative, à l'intérieur d'un tube de direction solidaire de la tringlerie 23.

La tringlerie 23 de la partie avant 2 est reliée au châssis 31 de la partie arrière 3 par la liaison mécanique amovible 6.

Selon un mode de réalisation illustré par exemple figure 3, cette tringlerie 23 est formée par deux montants croisés JS et IM reliés aux articulations I et S du bras avant et aux articulations J et L de la partie arrière, J, I, M et L désignant des articulations d'axes horizontaux parallèles à l'axe transversal T du véhicule 1.

De façon plus détaillée et en référence au mode de réalisation illustré sur la figure 3 notamment, la tringlerie 23 comporte :
- un cadre (IL) de la tringlerie 23 monté rotatif par rapport au châssis 31 au niveau de deux pivots en L, d'axe parallèle à l'axe transversal T, et par rapport au tube de direction IM (pivot en I, d'axe parallèle à l'axe transversal T). Il est composé par exemple de :
   ∘ deux tubes (IL) placés sensiblement côte-à-côté transversalement et concourants en I (alliage d'aluminium, d'acier, de matériaux composites ou autre matériau équivalent).
      Les deux extrémités des tubes (en L) sont équipées d'un dispositif configuré pour permettre le démontage rapide par rapport au châssis 31, comme par exemple un perçage pouvant recevoir une goupille clip ;
   ∘ d'un tube de liaison en K disposé parallèlement à l'axe transversal T reliant les deux tubes IL.
      Ce tube comporte deux pivots de liaison, chacun d'axe horizontal parallèle à l'axe transversal T du véhicule 1, ces pivots étant amovibles, de préférence démontables sans outil, avec un amortisseur 20 JK, et avec une bielle KM ;
   ∘ d'un élément de liaison avec le tube de direction IM, tel qu'un pivot femelle.
- des éléments de liaison avec le tube de direction (IM) du bras avant 24, lequel est formé d'un alliage d'aluminium, d'acier, de matériaux composites ou autres matériau équivalent.

Le tube de direction IM est équipé d'éléments de liaison avec le cadre de tringlerie 23, par exemple deux oreilles 230 venant accueillir le pivot femelle du cadre (voir la figure 8). La liaison entre le cadre IL et le tube de direction 23 est alors réalisée par un système démontable comme une goupille.

Le tube de direction IM est équipé d'éléments de liaison avec la bielle (KM). Par exemple deux oreilles 230' venant accueillir le pivot femelle de la bielle KM (voir la figure 9). La liaison entre la bielle KM et le tube de direction est alors réalisée par un système démontable comme une goupille.

Le tube de direction IM comporte en ses deux extrémités des éléments de liaison avec la colonne de direction (qui est interne au tube du direction) ;
- la bielle KM (alliage d'aluminium, matériaux composites ou autre matériau équivalent) est montée rotative (et démontable) en K avec les tubes IL et en M avec le bras avant 23.

Le cadre IL, le bras avant 23 et la bielle KM sont montés rotatifs (3 liaisons pivot), ils forment un treillis articulé avec 0 degré de liberté interne, soit un degré de liberté interne nul. Cela présente l'intérêt de limiter les moments d'encastrement aux liaisons (pivots parallèles à l'axe transversal T), de faire travailler la structure principalement en traction/compression plutôt qu'en flexion, et gagner ainsi en légèreté, et de faciliter le démontage.

Une solution où le cadre IL, le tube de direction 23 et la bielle KM sont montés encastrés tout en étant démontables peut être envisagée pour des raisons de coûts de productions ou de facilité d'entretien.

Le guidon 22 comporte des moyens de commande électrique 220 du moteur 5, en particulier une commande d'accélération, et comporte également des commandes de frein, des dispositifs de sécurité et de protection antivol. Le guidon 22 comporte également des éléments d'affichage de paramètres à l'utilisateur.

Les moyens de commande électrique 220 du moteur 5 électrique comportent en outre de préférence deux commandes supplémentaires : une première commande permettant l'activation et la désactivation d'une fonction dite « anti-patinage », et une seconde commande permettant une fonction dite « turbo ».

De façon détaillée, le guidon 22 comporte les éléments suivants :
- des poignées latérales 222, à savoir une poignée droite et une poignée gauche ;
- un dispositif de commande d'accélérateur (par exemple une commande adaptée pour être commandée par un doigt de l'utilisateur tel que son pouce) ;
- un dispositif de freinage, et comportant au moins un levier de frein 221 solidaire du guidon 22, le dispositif de freinage comportant un frein principal et un frein de secours ;
- un bouton de marche configuré pour que, lorsqu'il est activé, le moyen de propulsion 32 de type chenille entraine le véhicule motorisé 1 vers l'arrière, pour le faire reculer ;
- des organes électroniques permettant l'affichage de paramètres à l'utilisateur, issus d'un contrôleur ou de capteurs de la partie arrière 3 ; ces paramètres sont par exemple : la vitesse instantanée du véhicule, la tension et l'intensité instantanées du moteur 5 électrique, la température du moteur 5, le niveau de la batterie formant la source d'énergie, la distance parcourue, etc. ;
- les commandes permettant l'activation et la désactivation d'une fonction dite « anti-patinage » : la fonction « anti-patinage » permet de réduire la plage de commande de l'accélérateur par rapport à celle programmée par défaut dans les paramètres du contrôleur; son activation réduit la tension maximale délivrable aux bornes du moteur par le contrôleur, et donc sa vitesse de rotation maximale. L'utilisateur pourra activer cette fonction afin de limiter la perte d'adhérence et donc le glissement de la chenille 32 par rapport au sol S, lorsque l'engin évolue sur un sol à faible coefficient de frottement comme la glace, ou sur une pente importante ;
- les commandes permettant l'activation et la désactivation d'une fonction dite « turbo » : la fonction « turbo » permet d'augmenter la valeur de l'intensité maximale délivrable au moteur par le contrôleur par rapport à celle programmée par défaut dans les paramètres du contrôleur; la valeur par default limite le risque de surchauffe du (des) bobinages(s) moteur qui pourrait dégrader leur vernis et entraîner la ruine du moteur 5. L'utilisateur peut activer cette fonction afin d'augmenter temporairement ou non la puissance maximale délivrable au moteur par le contrôleur. Etant sorti de la plage d'utilisation conseillée, l'utilisateur surveillera la température du moteur grâce à l'affichage de cette valeur placé sur le guidon 22. En cas de dépassement d'une valeur de température programmée dans le contrôleur, ce dernier est configuré pour couper l'alimentation du moteur 5 et le signaler à l'utilisateur par l'intermédiaire d'un voyant situé sur le guidon. L'utilisateur devra attendre la redescente de la température sous cette valeur palier pour redémarrer le véhicule 1. Cette caractéristique permet de renforcer l'aspect ludique de la conduite du véhicule motorisé 1, et favoriser également son utilisation dans des courses sportives, ou récréatives dans les stations de sports d'hiver ;
- une ou plusieurs optiques lumineuses telles que des phares.

La liaison mécanique amovible 6 relie la tringlerie 23 de la partie avant 2 au châssis 31 de la partie arrière 3.

Le véhicule motorisé 1 comprend un dispositif de liaison électrique 7 entre la partie avant 2 et la partie arrière 3 de sorte à permettre le montage et démontage des deux parties, que ce soit mécaniquement et électriquement.

Le véhicule motorisé 1 comprend un dispositif de liaison mécanique démontable entre le câble de frein de la partie avant 2 et celui de la partie arrière 3 de sorte à permettre le montage et démontage des deux parties avant 2 et arrière 3.

La partie arrière 3 comporte quant à elle un châssis 31 formé par un ensemble tubulaire délimitant un espace intérieur à l'intérieur duquel est logé notamment un bloc moteur 5' comportant le moteur 5 et d'autres organes de puissance (tels qu'une batterie, un contrôleur et des circuits électroniques), des organes de sécurité tels que des capteurs, des interfaces d'arrêt d'urgence et des organes de de refroidissement destinés à refroidir le moteur 5 et autres composants pour éviter toute surchauffe.

En particulier, les organes de puissances comprennent :
- le moteur 5 électrique ;
- un contrôleur, en particulier un variateur de vitesse ;
- un relais de puissance ;
- une réserve d'énergie ou accumulateur, en particulier une batterie électrique pour alimenter en énergie électrique le moteur 5 ;
- un circuit de protection de batterie (Battery Mangement System ou « BMS ») : un tel circuit protège l'accumulateur des surtensions (freinage, recharge), des sous-tensions (décharge totale) et des échauffements.

De préférence, les organes de puissances sont configurés de sorte qu'il puisse fonctionner en mode moteur et en mode génératrice, et ce en sens avant comme en sens arrière. En d'autres termes, il est de préférence choisi un couple pouvant fonctionner dans les « 4 quadrants », c'est-à-dire permettant le fonctionnement « moteur » et « génératrice », et ce dans les deux sens de rotation (sens avant et sens arrière) :
- quadrant 1 : moteur sens avant
- quadrant 2 : génératrice/frein sens arrière
- quadrant 3 : moteur sens arrière
- quadrant 4 : génératrice/frein sens avant

Les organes de puissances comprennent en outre d'autres éléments électroniques tels qu'un circuit électronique haute puissance, un circuit électronique basse puissance, un circuit de récupération d'énergie (freinage et descente), un réseau de câblage, un interrupteur étanche tel qu'un interrupteur de mise sous tension, une prise étanche de recharge des accumulateurs et une prise de connectique pour paramétrer le contrôleur.

La récupération d'énergie est effectuée par l'intermédiaire d'un moto-variateur (couple moteur + variateur) qui retourne de l'énergie à l'accumulateur lors de la descente ou au freinage, par l'intermédiaire du circuit de protection de batterie (BMS).

L'accumulateur peut être rechargé des manières suivantes :
- en ouvrant une trappe de visite pour accéder à la batterie, débrancher et retirer la batterie, puis charger cette dernière grâce à un chargeur externe (chez l'utilisateur ou ailleurs) ;
- par l'intermédiaire d'une prise adaptée présente sur le véhicule 1 ce qui peut permettre la recharge à des bornes, sans avoir à retirer la batterie par exemple ; ou encore,
- à l'aide de panneau solaires portables, tels que des panneaux solaires sur toile flexible.

Le véhicule 1 comporte en outre des organes de sécurité de ces organes de puissance tels qu'un interrupteur d'arrêt d'urgence (manuel et anti-éjection) et un circuit fusible.

Pour éviter la surchauffe des organes de puissance, le véhicule 1 comporte des organes de refroidissement, tels qu'un système de ventilation forcée.

Sous l'effet de la résistance de ses conducteurs électriques, le moteur 5 a des pertes qui se transforment en chaleur (effet joule). Pour éviter qu'un échauffement trop important ne détruise le moteur (par exemple par la fonte du vernis des bobinages électriques), un système de refroidissement est intégré au « bloc moteur » 5'. Il est composé d'une entrée d'air, située à proximité du moteur 5 et sur la partie inférieure du carter entourant le bloc moteur 5', et d'une sortie d'air placée également à proximité du moteur et sur la partie supérieure du carter. L'entrée d'air présente une chicane ou labyrinthe pour éviter la pénétration d'eau/neige/sable dans le bloc moteur 5'. La sortie d'air ne présente pas obligatoirement de chicane, la selle 33 protégeant celle-ci d'une partie des projections extérieures. Un ventilateur, fonctionnant en extracteur d'air, est placé à l'intérieur du châssis 32 en amont de la sortie d'air. Ce sens de circulation de l'air (bas vers le haut) est choisi pour aller dans le même sens que la convection naturelle de l'air. La position de ces organes est choisie afin que le flux d'air frais vienne lécher le moteur 5 dans les zones proches des bobinages. L'enceinte de la ou des batterie(s) sera isolée par rapport à ce flux d'air froid afin d'assurer un bon comportement des batteries (les températures négatives diminuent la capacité des batteries).

Des capteurs tels que des capteurs de température sont placés au voisinage des éléments susceptibles de chauffer, comme le bobinage moteur, de sorte à pouvoir contrôler les pertes de chaleur du matériel électrique pour garantir son intégrité.

Afin d'éviter que la température de la batterie devienne trop basse et nuise à son comportement lors d'un stationnement prolongé du véhicule en milieu extérieur froid (par exemple la nuit), un dispositif chauffant (comme une résistance) pourra être placé à proximité des batteries. Ce dispositif chauffant pourra être alimenté par la batterie principale, ou par une batterie secondaire. Ce « chauffage » pourra être asservi par un thermostat.

Le bloc moteur 5' comportant le moteur 5 et les organes de puissance est confiné dans un carter étanche pour le protéger des attaques extérieures.

Cette étanchéité est assurée d'une part autour de l'arbre moteur 50 par des joints tels que des joints à lèvre ou équivalent (étanchéité dynamique) et, d'autres part, par l'utilisation de trappes de visites (non illustrées) équipant le carter, ces trappes de visites comportant un double recouvrement le long du pourtour ou de la périphérie de l'ouverture accompagné de joints tels que des joints plats en élastomère et/ou équivalents (étanchéité statique).

Le châssis 31 supporte une selle 33 permettant l'assise d'au moins un utilisateur. Des cales pieds 34 sont également solidaires du châssis 31 sur une partie inférieure de celui.

Par exemple, les cales pieds 34 avant peuvent être fixés à une plaquette 340 de liaison porte roulement du châssis 31 afin de limiter les passages d'effort dans le châssis 31 de sorte à conférer au véhicule 1 un gain en masse pour son dimensionnement (voir la figure 10).

D'autres paires de cales pieds 34 peuvent être installés sur le châssis 31 dans le cas où le véhicule 1 est agencé pour transporter des passagers sur sa selle 33 en plus du conducteur.

Le moyen de propulsion 32 de type chenille est situé sous le châssis et est supporté par un bogie 8.

De façon générale bogie 8 forme un système de guidage, d'entraînement et de freinage du véhicule 1.

Le bogie 8 comporte un bogie supérieur 81 solidaire du châssis 31 et un bogie inférieur 82 situé sous le bogie supérieur 81.

Les bogies inférieur 82 et supérieur 81 sont reliés ensemble par un mécanisme de suspension 80, le bogie inférieure 82 présentant au moins un degré de liberté par rapport au bogie supérieur 81 pour améliorer sa franchissabilité, sa maniabilité et le confort de conduite.

La transmission mécanique entre le moteur 5 et le bogie 8 est effectué à l'aide d'une courroie 51 ou d'une chaîne menée par la rotation de l'arbre moteur 50 et permettant d'entraîner une roue ou barbotin 813, laquelle entraîne en rotation la chenille 32.

De façon générale, le bogie 8 est un système mécanique articulé et amorti qui permet le guidage, la rotation et le maintien sous tension de la chenille 32, et qui permet la suspension du châssis 31 et de(s) utilisateur(s). Il participe également à la cinématique générale du véhicule 1, qui sera détaillée après.

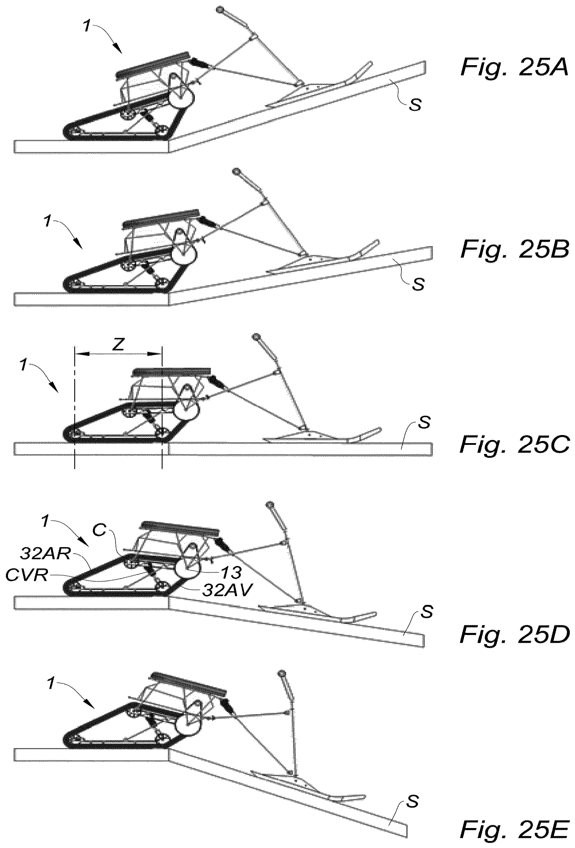

Le bogie 8 est composé de deux sous-ensembles reliés entre eux par une ou plusieurs bielles (ou « bras ») montées rotatives (plan (O,L,V)), et par une ou plusieurs suspensions également montées rotatives (plan (O,L,V)) :
- le sous-ensemble supérieur est appelé « bogie supérieur » 81 ou « bogie fixe » et est solidaire du châssis 31 avec un degré de liberté nul, sauf éventuellement la déformation structurale qui est négligeable ;
- le sous ensemble inferieur est appelé « bogie inférieur » 82, « bogie mobile » ou encore « glissière », et possède au minimum un degré de liberté par rapport au bogie supérieur 81 : il s'agit par exemple d'une rotation selon un axe appelé « axe instantané de rotation », parallèle à l'axe transversal T (cf. figure 25) et passant par un point appelé « centre instantané de rotation » ou CIR (ou CVR).

La structure primaire du bogie supérieur 81 est composée de deux rails 810 (ou deux tubes) longitudinaux parallèles mécaniquement solidaires, assurant le guidage de la chenille 32 sur sa partie supérieure.

Le bogie supérieur 81 est équipé d'au moins une roue libre 811 sur sa partie arrière afin de guider la chenille 32 sur l'angle obtus arrière de sa trajectoire.

Cette(ces) roue(s) pourra(ont) être en attente, c'est-à-dire ne pas être en permanence en contact avec la chenille 32, dans le cas par exemple d'une chenille 32 dite « triangulaire » présentant une forme globalement triangulaire ou plus généralement présentant trois sommets ou renvois.

D'autres roues libres pourront équiper les rails 810 au niveau des liaisons avec les bielles et suspensions.

Le bogie supérieur 81 est équipé d'un arbre 812 monté rotatif sur sa partie avant, afin d'assurer l'entraînement, le freinage et le guidage de la chenille 32 par l'intermédiaire d'un pignon d'entraînement, appelé aussi barbotin 813, solidaire de l'arbre 812.

L'arbre 812 du barbotin 813 est équipé d'une couronne d'entraînement permettant de transmettre et de démultiplier le couple moteur, et d'un frein tel qu'un frein à disque permettant d'exercer un couple de freinage entre le solide supérieur formé par le bogie supérieur et l'arbre 812.

L'arbre 812 peut être cannelé ou rainuré et équipé de clavettes. L'arbre pourra également comporter des roues libres de part et d'autre du barbotin 813.

Le barbotin 813 (et son arbre 812) est placé sur le bogie supérieur 81 plutôt qu'inférieur 82 afin de le protéger par gravité de la neige qui pourrait venir obstruer ses dentures, et ainsi perturber l'entraînement de la chenille 32, voire entraîner son déraillement.

L'arbre 812 du barbotin 813 dépasse volontairement de part et d'autre de la chenille 32 afin de pouvoir mécaniquement relier la couronne et le frein à disque au châssis. En d'autres termes, la longueur de l'arbre 812 est supérieure à la largeur de la chenille 32.

Le bogie supérieur 81 présente au moins deux axes de liaison avec le châssis 31, un axe avant A81 (appelé axe AV) et un axe arrière A81' (appelé axe AR), qui dépasseront nécessairement de part et d'autre de la chenille 32.

Cet arbre 812, du fait de sa longueur supérieure à la largeur de la chenille 32, peut frotter dans la poudreuse/sable et augmenter considérablement la traînée du véhicule. On cherchera à placer cet axe le plus haut possible pour augmenter le caractère tout-terrain du véhicule.

Le bogie supérieur 81 étant relié par au moins deux pivots au châssis, aucun degré de liberté n'existe entre ces deux corps.

L'axe avant A81 est de préférence confondu avec l'axe de l'arbre d'entraînement 812 pour gagner en masse et simplicité de montage.

L'extrémité avant du bogie supérieur 81 est placée en avant de celle du bogie inférieur 82 afin que la chenille 32 ait un angle d'attaque α (voir la figure 3) permettant :
- d'aplatir progressivement sous son passage la poudreuse ou autres irrégularités de terrain (meuble) afin d'augmenter le rendement de la chenille 32 par rapport à une solution sans angle d'attaque ; et
- d'amortir les chocs en cas d'irrégularités de terrain.

La structure primaire du bogie inférieur 82 est composée de deux rails 820 longitudinaux parallèles mécaniquement solidaires, assurant le guidage de la chenille 32 sur sa partie inférieure, et assurant le contact entre la chenille 32 et le sol S sur les surfaces inférieures des deux rails 820.

Les rails 820 sont équipés de patin anti-friction (non illustrés) au niveau de leur surface de contact avec la chenille 32 afin de réduire les frottements et donc les pertes énergétiques.

La chenille 32 est rainurée afin d'être guidée dans son entraînement par les rails 810, 820, roues libres 811, 821 et barbotin 813.

Le bogie inférieur 82 est équipé d'une ou deux roues libres 821 sur sa partie arrière afin de guider la chenille 32 sur l'angle aigu arrière de sa trajectoire.

D'autres roues libres 821 peuvent équiper les rails 820 au niveau des liaisons avec les bielles et suspensions, pour réduire les frottements à ces points de passage d'efforts plus importants.

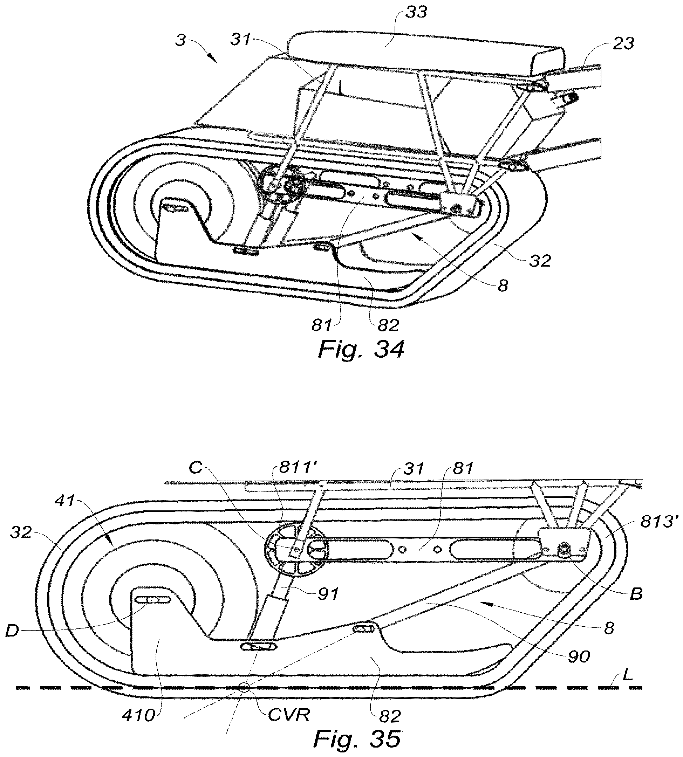

Le bogie inférieur 82 est équipé de deux roues libres 821 sur sa partie avant afin de guider la chenille 32 sur l'angle obtus avant de sa trajectoire (voir figures 25). Alternativement à l'avant, les roues libres peuvent être remplacées ou complétées avec un bord de glissement, comme cela est illustré sur la figure 3, par exemple (voir également les figures 34 et 35 selon un autre exemple).

Les rails inférieurs 820, parallèles, sont espacés d'une distance inférieure à la largeur de la chenille 32 se sorte qu'aucune partie du solide inférieur ne dépasse de la chenille 32 sur une vue de face, afin d'éviter des frottements lorsque le véhicule 1 évolue en terrain meuble (poudreuse, boue, sable).

La chenille 32 qui est guidée par le bogie 8 décrit ci-avant permet l'adhérence au sol, la traction, et la flottaison en milieu meuble (neige poudreuse, sable, boue) du véhicule 1.

La chenille 32 présente une partie de corps de courroie à boucle continue ou sans fin ayant une surface extérieure destinée à entrer en prise avec le sol S (crampons) et une surface intérieure incluant des éléments entraînés (bossages ou trous).

Les éléments entraînés sont conçus pour être mis en prise par un pignon d'entraînement, c'est-à-dire le barbotin 813.

L'adhérence au sol S, directement corrélée à la poussée maximale du véhicule, est proportionnelle à la surface de contact sol S/chenille 32, au matériau du revêtement extérieur de la chenille 32 (caoutchouc ou équivalent), pour augmenter le coefficient de frottement chenille 32/sol S, et à la géométrie des crampons extérieurs.

La géométrie des crampons pourra varier en fonction de l'utilisation privilégiée du véhicule 1 : crampons longs pour sols meuble (neige poudreuse, sable, boue), et courts pour sols durs (glace, neige damée).

La flottaison du véhicule 1 est proportionnelle à la surface de contact véhicule 1/sol S, c'est-à-dire chenille 32 /sol S et patin directeur 21/sol S. Des clous pourront être fixés sur la surface extérieure de la chenille 32 pour augmenter son adhérence sur la glace ou neige dure.

Le couple issu du moteur 5 électrique est démultiplié puis transmis au barbotin 813 par la chaîne ou courroie 51, puis transmis à la chenille 32 sous la forme d'effort entre les éléments entraînant (en prise) du barbotin et les éléments entraînés (en prise) de la chenille 32, ainsi que par adhérence sur la surface de contact chenille/barbotin.

Cet effort F est transmis le long de la chenille 32 par tension du brin tendu (brin BCD), puis au sol par adhérence au niveau de la surface de contact chenille 32 /sol S. Cela se traduisant par une accélération g telle que g = F/m où m est la masse entraînée (du véhicule 1 et du/des utilisateur(s)).

Le couple résistant issu du dispositif de freinage est transmis au barbotin 813, puis transmis à la chenille 32 sous la forme d'effort entre les éléments entraînant (en prise) du barbotin 813 et les éléments entraînés (en prise) de la chenille 32, ainsi que par adhérence sur la surface de contact chenille 32 / barbotin 813. Cet effort -F est transmis le long de la chenille par tension du brin tendu (brin BAD), puis au sol par adhérence au niveau de la surface de contact chenille 32 / sol S. Cela se traduisant par une décélération g telle que g = -F/m où m est la masse entraînée (du véhicule 1 et du/des utilisateur(s)).

Le véhicule 1 comporte de préférence un dispositif de réglage de la tension de la chaîne ou courroie 51 tel qu'en tendeur, dynamique ou statique.

On préférera la solution du réglage statique, c'est-à-dire sans tendeur dynamique, afin de gagner en masse, en frottement, en simplicité de montage, et en bruit. Le chemin d'effort entre le moteur 5 et la couronne du barbotin 813 a été étudié afin de limiter les variations d'entraxe (moteur 5 - couronne 813) sous des efforts de chaîne ou courroie 51 importants. Pour cela, il est avantageux de configurer le véhicule 1 pour que l'axe de la liaison entre la chenille 32 et le châssis 31 est confondu avec l'axe d'entraînement (portant la couronne formant barbotin 813). Cela limite en outre le travail en flexion les éléments de châssis 31 situé entre l'axe de liaison B et le bloc moteur 5.

Ce réglage statique de tension de la chaîne ou de la courroie 51 formant la liaison entre le bloc moteur 5' et le châssis 31 sera effectué à l'aide de 4 systèmes vis-écrou-contre écrou, afin de pouvoir régler la tension de la chaîne/courroie 51.

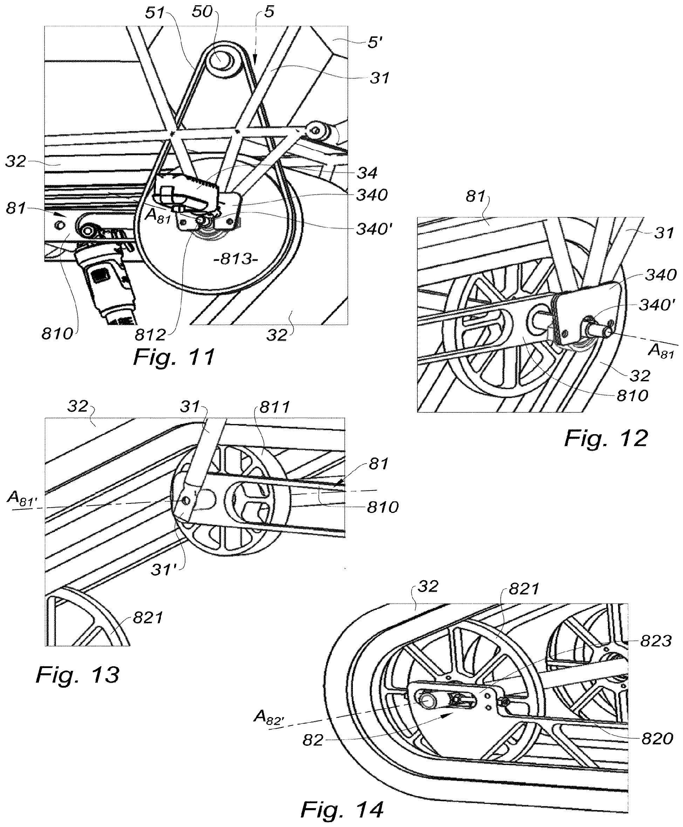

De préférence, le véhicule 1 est équipée d'un tendeur de la chenille 32. La partie arrière 3 du véhicule 1, en particulier les des rails 820 du bogie inférieur 82 comportent chacun un trou oblong 823 permettant le réglage en translation de l'axe D des roues libres 822 formant renvoi un angle inférieur arrière (voir la figure 14).

Un système vis/écrou/contre écrou permet le blocage de l'axe en une position donnée. Ce système permet un réglage statique de la tension de la chenille 32.

Le châssis 31 du véhicule est donc lié mécaniquement d'une part au bogie 8 et d'autre part au bloc avant 2.

L'interface entre le châssis 31 et le bogie 8 comporte une liaison mécanique démontable assurant l'encastrement du châssis 31 au bogie supérieur 81, cette liaison mécanique comportant de préférence au minimum 2 liaisons pivots d'axe parallèle à l'axe transversal T, et notamment une liaison avant et une liaison arrière :
- liaison avant : l'arbre d'entraînement 812 est monté sur deux paliers à applique, un droite et un palier gauche, dont chaque applique est encastrée au châssis 31 par des fixations, notamment par l'intermédiaire d'une plaquette 340 porte roulement soudée au châssis 31, sur lesquelles les cales pieds 34 sont d'ailleurs solidarisés.
   Selon la configuration illustrée, chaque plaquette 340 présente un demi trou oblong 340' sur le bord libre inférieur afin de faciliter le démontage (voir les figures 11 et 12). Ainsi, lorsque les deux fixations des deux paliers (droite et gauche, soit 4 fixations) sont ôtées, le châssis 31 se démonte facilement en le soulevant verticalement.
- liaison arrière : l'axe arrière A81' n'étant pas rotatif, les roues libres 812 étant montées sur roulement, le bogie 8 est relié au châssis 31 par l'intermédiaire de deux fixations situées de chaque côté de l'axe et coaxiales à cet axe. L'arbre portant cet axe A81 sera par exemple équipé d'inserts filetés. Les extrémités 31' des tubes de liaison du châssis 31 sont écrasées et percées pour recevoir les fixations. Ainsi, lorsque les 2 fixations (droite et gauche) sont ôtées, le châssis 31 se démonte facilement en le soulevant verticalement.

Une variante de réalisation de ces liaisons consisterait à réaliser un demitrou oblong sur le bord libre des extrémités des tubes de liaison du châssis 31, et que l'axe aient ses extrémités filetées.

Comme mentionné, la liaison mécanique amovible 6 relie la tringlerie 23 de la partie avant 2 au châssis 31 de la partie arrière 3.

Selon une caractéristique, la liaison mécanique comprend un moyen de préhension 61 configuré pour permettre le montage et le démontage manuel de la liaison mécanique 6.

Le moyen de préhension peut soit être directement attaché à la liaison mécanique de sorte que son simple déplacement permette le montage et le démontage de ladite liaison. Un tel moyen de préhension peut être par exemple un levier associé à une came permettant de mettre en tension, pour le serrage, ou hors tension, pour le desserrage, l'élément à serrer de type collier. Ce type de fixation est communément appelé « attache rapide ».

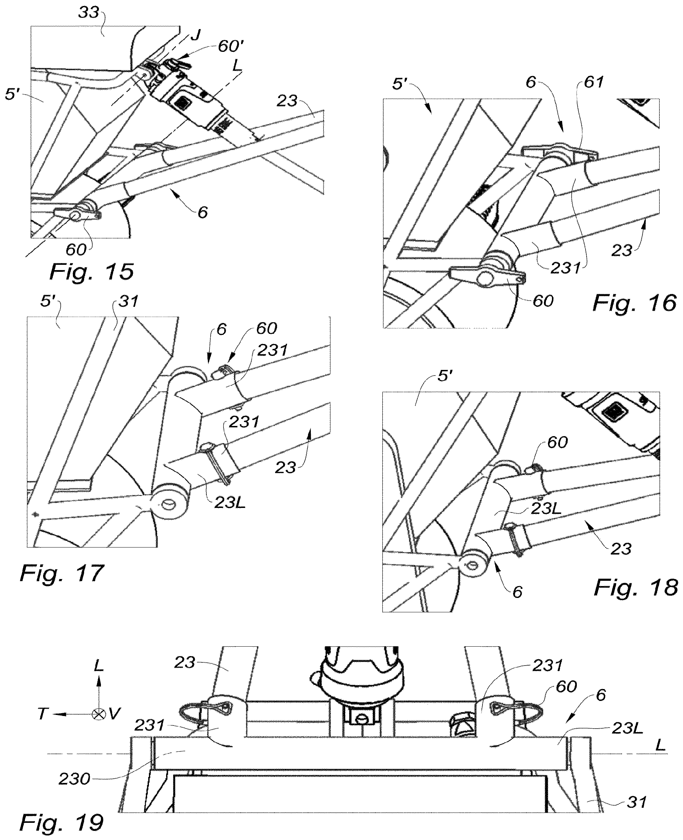

Sur la figure 16 par exemple un tel moyen de préhension est formé par une poignée dite papillon solidaire de l'axe pivot et sécurisée par un bouton poussoir.

Toutefois le moyen de préhension peut être amovible, c'est-à-dire désolidarisable et déportable de la liaison, par exemple pour éviter le démontage du véhicule par une personne mal intentionnée qui voudrait tenter de voler le véhicule. Ce moyen de préhension présente alors la forme d'un outil simple, par exemple de type clé.

Ce moyen de préhension est différent d'un outil en ce qu'il permet une coopération directe avec la liaison mécanique, et qu'il est très facile à utiliser et très rapide.

De préférence, par « rapide » il est entendu une liaison mécanique 6 pouvant être démonté dans un délai inférieur à la minute, de préférence inférieur à 20 secondes. Ce délai peut être légèrement plus long (de l'ordre de quelques minutes) dans le cas où la liaison mécanique 6 comporte un moyen de fixation mécanique amovible, par exemple de type vis-écrou, qui peut être démonté avec un outillage simple, tel qu'un tournevis standard

En référence aux figures 15 à 19 par exemple, la liaison mécanique amovible 6 est articulée de sorte à assurer une liaison pivot d'axe horizontal s'étendant parallèlement à l'axe transversal T, soit transversalement par rapport à un axe longitudinal L de référence du véhicule 1.

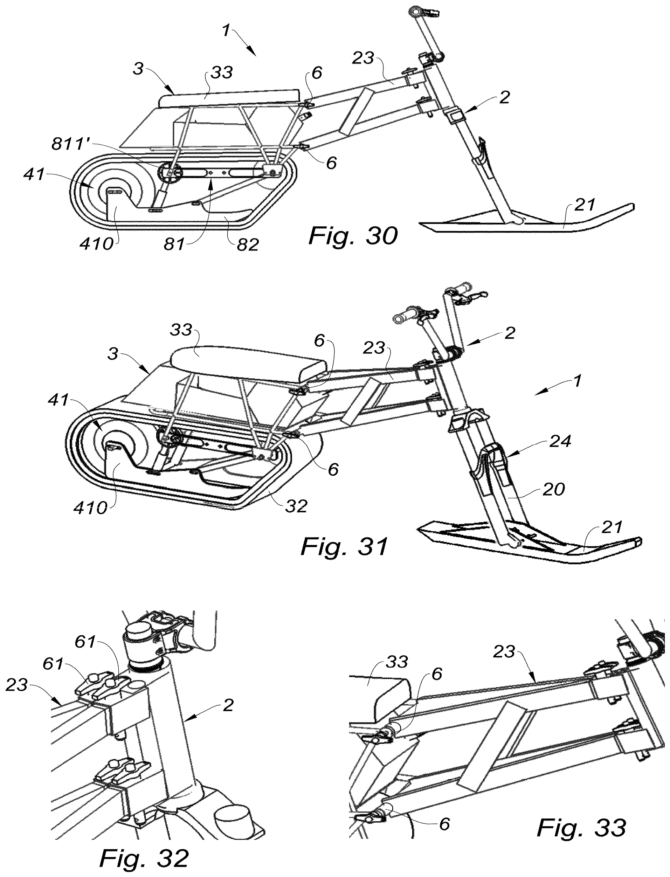

Pour la configuration à fourche amortie (figure 30) (pour laquelle la tringlerie 23 ne présente pas de degré de liberté), les pivots de la liaison amovible 6 (supérieure (axe J) et inférieure (axe L)) présentent l'intérêt de ne pas transmettre de moment par les axes L et T. Cela réduit les efforts dans le châssis 31 (et permet donc de gagner en masse).

En particulier, cette interface 6 de fixation entre la partie avant 2 et le châssis 31 de la partie arrière 3 comporte notamment :
- une liaison inférieure de type liaison pivot d'axe parallèle à l'axe transversal T et de centre L (voir figure 3) : la liaison présente au minium un système de montage et démontage 60 rapide (goupille ou autres) et sécurisé (bille/clip).
- une liaison supérieure de type liaison pivot d'axe parallèle à l'axe transversal T et de centre J (voir figure 3) : la liaison présente au minium un système de montage et démontage 60' rapide (goupille ou autres) et sécurisé (bille/clip) : elle permet de désolidariser mécaniquement la partie avant 2 de la partie arrière 3, rapidement et sans outil.

Dans une configuration illustrée par exemple sur les figures 5 à 20, la tringlerie 23 et le châssis 32 sont reliés ensemble par une pièce de liaison 23L solidarisée, par exemple par encastrement, à la partie avant 2 avec la tringlerie 23 par l'intermédiaire d'un dispositif 60 permettant le montage et démontage rapide, comme par exemple deux liaisons de type encastrement de tubes concentriques sécurisées par une goupille.

Pour que cette liaison soit démontable, il est impératif que les deux départs ou portions tubulaires 231 de la pièce de liaison 23L pour leur emmanchement avec la tringlerie 23 soient d'axe parallèles entre eux. Sur la figure 19, les extrémités des tubes de la tringlerie 23 sont coudées afin de pouvoir s'emmancher dans la pièce de liaison 23L.

Cette pièce de liaison 23L est montée rotative, par l'intermédiaire de coussinets, roulement ou autre dispositif équivalent, par rapport à un arbre 230 d'axe L concentrique solidaire du châssis 32, par exemple par deux fixations latérales espacées transversalement et formant des paliers à cet arbre 230, en ses deux extrémités.

La liaison entre la pièce de liaison 23L et la partie avant 2 peuvent présenter des difficultés de montage, par exemple en cas de dilatation thermique des pièces. Dans ce cas, une variante possible est de placer le système de montage et de démontage rapide 6 entre le châssis 32 et l'arbre 230. Dans ce cas de figure, la pièce de liaison 23L serait alors solidaire de la partie avant 2 : la goupille peut être remplacée par des vis, voir même une soudure.

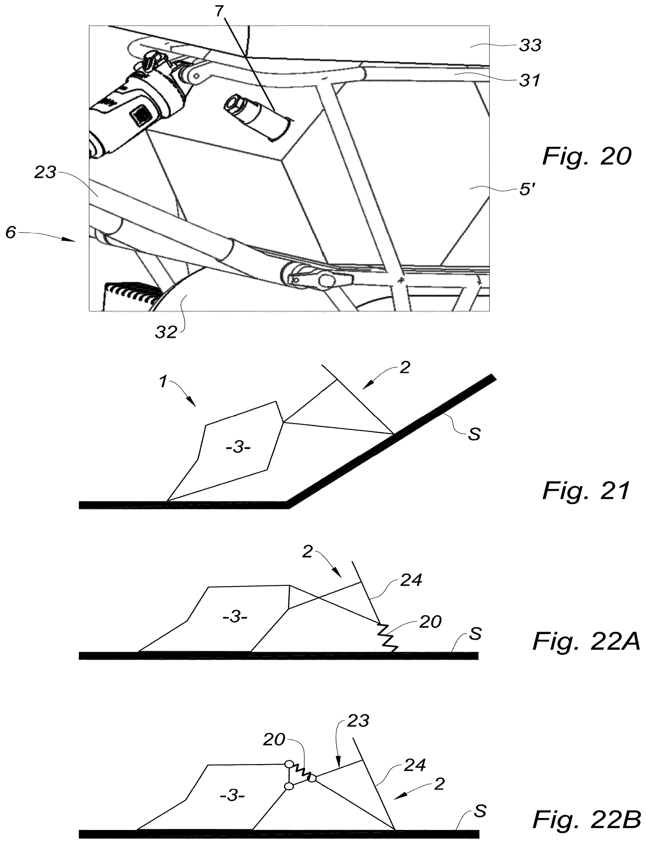

La liaison électrique 7 (voir la figure 20) entre la partie avant 2 et la partie arrière 3 est configurée de sorte à permettre le montage et démontage des deux parties avant 2 et arrière 3, que ce soit mécaniquement et électriquement comporte notamment un connecteur électrique étanche, tel qu'un connecteur de type IP65 mini, mâle ou femelle.

Cette liaison électrique 7 est également amovible de sorte à permettre de connecter/déconnecter électriquement le bloc avant 2 du bloc arrière 3, rapidement et sans outil.

Sur sa partie arrière 3, le châssis 31 comporte en outre une interface de fixation pour des éléments arrière de traction 100' tels qu'une remorque montée sur patins ou skis (figure 40A), un traîneau pour transporter des passagers (figure 40B) ou un traceur de chemin tel qu'une toile.

Dans ce cas, une liaison mécanique telle qu'une liaison pivot, rotule ou encastrement, permet la fixation de modules arrière tels qu'un traîneau, une corde de traction, etc.

Un connecteur électrique étanche est également prévue dans ce cas (par exemple de type IP65 mini, mâle ou femelle) permettant de connecter/déconnecter un élément arrière au véhicule. Cela peut par exemple servir à l'ajout d'optiques ou phares arrière ou feux stop à une remorque/traîneau.

La cinématique générale du véhicule motorisé 1 a été conçue pour lui assurer une franchissabilité optimisée des obstacles comme une maniabilité facilitée pour son utilisateur.

La liaison entre le véhicule 1 et le sol S étant composée d'un appui plan au niveau de la chenille 32, et d'un appui sensiblement ponctuel au niveau du patin directeur 21 formé par le ski (en considérant que le ski est libre en rotation par rapport au châssis 32), il est impératif que le châssis 32 ait au minimum un degré de liberté interne afin de garantir l'isostatisme véhicule/sol en cas de cassure de pente, ceci afin de garder un contact plan entre la chenille 32 et le sol S. La figure 21 illustre une configuration dans laquelle l'isostatisme n'est pas respecté à cause d'une cassure de pente trop importante.

Une solution consisterait à placer un amortisseur ou suspension 20 entre le bras avant 24 et le ski 21. Le degré de liberté interne serait alors une translation de même axe que le bras avant 24 (voir figure 22A).

Cette solution est pratique et facile à mettre en oeuvre pour une circulation en milieu urbain par exemple mais ne suffit pas à garantir une bonne franchissabilité au véhicule 1. En effet plus la cassure de pente serait importante, plus la suspension avant devrait être comprimée pour que l'appui plan au niveau de la chenille 32 soit garanti. Au-delà d'une certaine pente, l'effort exercé sur l'avant du véhicule 1 (que l'on considère proportionnel à la course de la suspension de raideur K) serait tel que l'équilibre des moments sur le véhicule 1 serait incompatible d'un appui plan au niveau de la chenille 32.

Une autre solution consisterait à lier le sous-ensemble avant 2 au sous-ensemble arrière 3 par une liaison pivot d'axe horizontal parallèle à l'axe transversal T (voir figure 22B). Il est alors nécessaire d'amortir la rotation entre les deux sous-ensembles par une suspension 20 pour donner de la raideur au véhicule 1.

Pour autant cela n'est également pas suffisant pour garantir une bonne franchissabilité au véhicule 1 sur certains types de terrains, notamment hors des zones urbaines. La rotation entre la partie avant 2 et la partie arrière 3 est limitée par la course de l'amortisseur. Au-delà d'une certaine pente, l'effort appliqué par l'amortisseur et le la partie avant 2 sur la partie arrière 3 ferait basculer cette partie arrière vers l'arrière et limiterait l'adhérence de la chenille 32 par rapport au sol S.

Afin que la rotation interne du châssis 32 ne soit pas limitée par la course d'un amortisseur 20, et afin d'éviter le décollement de l'avant de la chenille 32 par rapport au sol S en montée, on confère à la partie arrière 3 au minimum un degré de liberté interne. C'est en particulier l'avantage conféré par le degré de liberté, notamment la rotation, du châssis 32 portant le pilote par rapport au bogie inférieur 82, le bogie inférieure 82 présentant au moins un degré de liberté par rapport au bogie supérieur 81. Ce mouvement entre les deux bogies inférieur 82 et supérieur 81 est aussi appelé « rotation libre ».

Le bogie inférieur 82 de la chenille 81 est de préférence relié au châssis 32 portant le pilote par au minimum deux éléments de liaisons de type bielle 801 et/ou suspension 802.

La rotation relative selon un axe parallèle à l'axe transversal entre le bogie inférieur 82 et le châssis 32 a lieu autour d'un point appelé Centre Virtuel de Rotation (CVR) ou Centre Instantané de rotation (CIR), et situé à l'intersection des deux éléments (bielle et/ou amortisseurs) participant à la liaison.

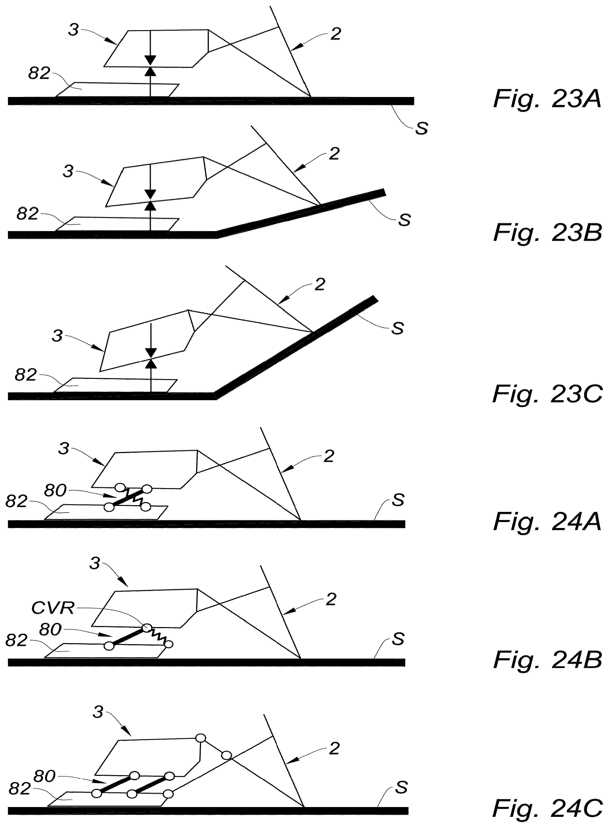

Dans le cas où ces deux éléments sont parallèles (voir par exemple la figure 24C), le CVR est projeté à l'infini et le mouvement relatif entre le bogie inférieur et le châssis sera une translation. Par abus de langage, on appellera ce mouvement rotation également dans ce cas.

Dans le cas où le châssis 32 est lié au bogie inférieur 82 par deux bras ou bielles, leur mouvement relatif est limité à un degré de liberté unique (rotation selon le CVR).

Dans le cas où le châssis 32 est lié au bogie inférieur 82 par deux bras ou bielles, ainsi que par une ou plusieurs suspensions, leur mouvement relatif est limité par exemple à un degré de liberté unique (rotation selon le CVR) amorti.

Alternativement, dans le cas où le châssis est lié au bogie inférieur 82 par un bras et une suspension (voir les figures 24A, 24B 26A et 26B), leur mouvement relatif a deux degrés de liberté : une rotation selon le CVR, et le mouvement lié à la course du vérin de l'amortisseur.

Une telle solution, présentant au moins un degré de liberté, présente notamment l'avantage de conférer au véhicule une grande franchissabilité : la cinématique isostatique du véhicule 1 lui permet en effet de franchir des cassures de pente importante (+- 40%)) et sans élan, parce que l'appui plan de la chenille 32 est assuré.

Cette cinématique illustrée plus en détail en référence aux figures 23A à 23C et 25A à 25C, permet d'assurer un effort sur le ski 21, ceci pour toute position du (des) passager(s), dès l'instant où le centre de gravité de la masse suspendue soit en avant par rapport au CVR.

En effet, la position du CVR est un paramètre permettant de faire varier l'effort sur le ski. Pour maximiser l'effort sur le ski, on cherchera à reculer le CVR un maximum. Afin de réduire les risques de cabrage du châssis 32 qui intervient lorsque le centre de gravité de la masse suspendue est derrière le CVR, on placera le CVR en arrière par rapport à la position la plus reculée du centre de gravité en considérant une configuration avec un passager unique, redressé, et reculé au maximum sur la selle.

De préférence, une sangle est disposée et même interposée entre l'avant du châssis 32 et l'avant du bogie inférieur 82 pour limiter leur rotation respective (par exemple en montée avec forte pente, ou sous les efforts moteur).

Enfin, afin de maintenir la chenille 32 appuyée au sol, en particulier dans le cas où le châssis 32 est lié au bogie inférieur 82 par deux éléments de liaison (bras, bielles, suspension), le bogie 8 est configuré de sorte que le CVR est situé longitudinalement dans une zone Z située au droit, ou à la verticale, de la surface de contact entre la chenille 32 et le sol S (voir la figure 25C).

Idéalement dans ce cas, pour assurer une pression homogène de la chenille 32 sur le sol S, le CVR est situé à la verticale du milieu de la surface de contact de la chenille 32 avec le sol S.

Par ailleurs, une telle cinématique avec une rotation libre entre le bogie inférieur 82 et le châssis 32 est avantageuse en ce que cette rotation libre ne peut pas se produire de manière intempestive (par exemple si le pilote tire en arrière sur le guidon 22) car elle est stabilisée par l'énergie potentielle de pesanteur de la masse suspendue. La rotation libre à cabrer du châssis 32 nécessite une élévation du centre de gravité de la masse suspendue, ceci à condition que ce centre de gravité soit en avant par rapport au CVR bien entendu.

Cette cinématique permet également de suspendre le/les passager(s) avec des éléments de liaison entre le châssis 32 et le bogie inférieur comprenne (au minimum) une suspension. Pour le confort du pilote, le véhicule 1 présente également une suspension avant 20 comme décrit plus avant, portée par la partie avant 2.

Une telle suspension avant 20 est avantageuse pour amortir les accélérations du véhicule 1 et le (les) passager(s) lors des chocs frontaux (qui se produisent essentiellement en descente) ou du freinage.

Une telle suspension 20 participe également à la cinématique globale du véhicule 1. En choisissant judicieusement le rapport entre la suspension avant 20 et la suspension arrière 802 entre les bogies inférieur 82 et supérieur 81, il est possible de configurer le véhicule 1 de sorte que la rotation du châssis 32 sous l'effet du poids des passagers soit la plus faible possible, ceci afin d'améliorer le confort de ces derniers.

La suspension avant permet également d'augmenter la franchissabilité du véhicule 1. En se comprimant simultanément à la rotation libre, la suspension avant 20 permet au véhicule 1 de franchir, toujours de façon isostatique, des cassures de pente plus importantes qu'avec la rotation libre seule.

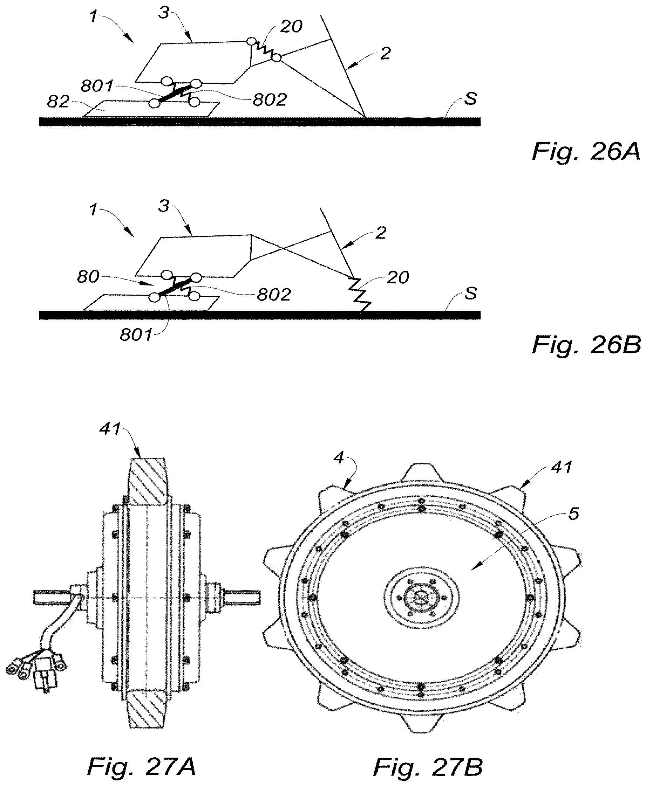

Comme décrit précédemment, une telle suspension avant 20 pourra être placée soit :
- montée rotative entre la partie avant 2 et la partie arrière 3 (voir figure 26A), à condition que les deux parties avant 2 et arrière 3 soient liés par une liaison pivot d'axe parallèle à l'axe transversal T : dans ce cas, la colonne de direction ne travaille qu'en traction/compression sous les efforts liés à la masse passagers (en négligeant les efforts guidon), et n'a donc pas à être dimensionnée en flexion, ce qui représente un gain en masse ; par ailleurs, une telle suspension avant ne travaille qu'en compression, et n'a donc pas à être dimensionnée en flexion, ce qui représente un gain en masse.
   et/ou,
- plus classiquement, entre la colonne de direction et le ski 21 (voir figure 26B) : la partie avant 2 n'ayant pas de degré de liberté par rapport à la partie arrière, le véhicule sera plus simple de fabrication.

La chenille 32 peut présenter des formes différentes, c'est-à-dire que la boucle fermée délimitée par la chenille 32 peut présenter une forme dans le plan vertical (OLV) qui diffère selon les configurations.

La longueur de chenille 32 portante définie la longueur de chenille 32 en contact avec le sol S dans les conditions normales d'utilisation du véhicule 1. La chenille 32 pouvant représenter une part importante de la masse du véhicule 1, il est avantageux d'avoir un rapport de la longueur portante sur la longueur totale le plus important possible.

Une des formes de chenille 32 garantissant ce meilleur rapport longueur portante sur longueur totale tout en garantissant un angle d'attaque, est la chenille triangulaire. Toutefois, une forme de chenille 32 quadrilatère visible sur les figures présente un avantage supplémentaire qui est de pouvoir placer un axe supérieur arrière en hauteur.

Du fait de l'utilisation d'un bogie 8 articulé, un périmètre de chenille 32 constant au cours du mouvement du bogie inférieur 82 par rapport au bogie supérieur 81 n'est pas toujours garanti. En effet, une diminution du périmètre de chenille 32 entraîne une diminution de la tension de celle-ci, qui peut conduire à un phénomène de broutage du barbotin 813 par rapport à la chenille 32, et donc une perte de poussée ou de freinage. De préférence dans ce cas, le bogie 8 est configuré de sorte que les éléments de liaison (bras 801 et/ou amortisseurs 802) entre les bogies inférieur 82 et supérieur 81 sont positionnés de façon à limiter la variation de périmètre de chenille à une valeur garantissant le bon entraînement de la chenille 32 par le barbotin 813, lorsque le bogie inférieur décrit l'ensemble des positions possibles par rapport au bogie supérieur 81. Cela permet de ne pas avoir à équiper la chenille 32 de tendeur dynamique (gain en masse, en maintenance, en fiabilité).

Dans une configuration technique particulière, le CVR du bogie 8 articulé est placé longitudinalement entre les axes B et C du bogie supérieur 81 de sorte que, sous une rotation libre, la variation de longueur du brin libre avant 32AV de chenille 32 compense la variation de longueur du brin libre arrière 32AR.

La position du CVR est choisie par exemple de façon empirique entre ces deux axes B et C pour trouver un compromis entre :
- rapprocher le CVR du point C ce qui diminue l'influence de la rotation libre sur la longueur du brin libre arrière 32AR et augmente l'influence de celle-ci sur la longueur du brin libre avant 32AV (voir la figure 25D) ; et
- rapprocher le CVR du point B ce qui diminue l'influence de la rotation libre sur la longueur du brin libre avant 32AV et augmente l'influence de celle-ci sur la longueur du brin libre arrière 32AR.

L'effort de propulsion du véhicule 1 est transmis du barbotin 813 entraîné par le moteur 5 au sol S par l'intermédiaire du brin tendu de la chenille 32. La tension du brin tendu est à l'origine d'efforts sur le bogie supérieur 81 au niveau du barbotin 813 et en C en niveau des roues libres, et sur le bogie inférieur 82 en D au niveau des roues libres.

Dans ce contexte, et pour limiter les efforts moteurs dans le cas d'un bogie 8 articulé, il est avantageux de limiter le moment exercé sur le bogie inférieur 82 au CVR par la tension de la chenille 32, et de placer le CVR le plus près possible de la droite appelée « ligne d'effort chenille », passant par le brin libre arrière (tendu en marche avant), à savoir par exemple le brin s'étendant de B vers 1 en passant par les axes arrières C et D des bogies inférieur 82 et supérieur 81 pour une chenille 32 munie de quatre renvois.

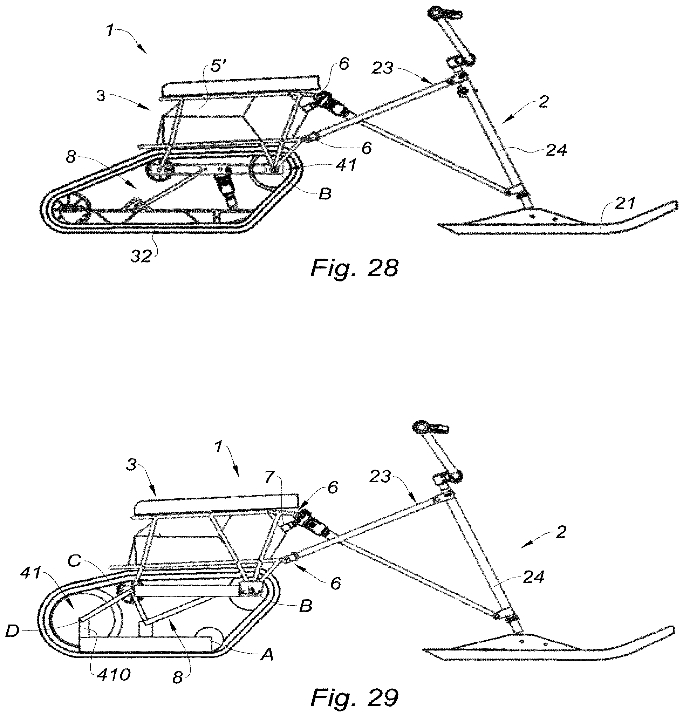

Les figures 28 et 29 illustrent deux autres modes de réalisation. Ces modes de réalisation diffèrent en substance des autres modes de réalisation précédents essentiellement en ce que le véhicule comprend un moyen de propulsion 32 de type chenille et entraîné par un mécanisme de transmission 4 configuré pour être mû par un moteur 5, le moteur 5 étant logé dans une roue 41 du mécanisme de transmission 4 formant une roue d'entraînement du moyen de propulsion 32.

Dans ce cas le moteur 5 est déporté du reste des organes de puissance, ces derniers étant toujours logés à l'intérieur de l'espace délimité par le châssis 31, sous la selle 33.

Un exemple d'un tel moteur-roue est illustré en détail sur les figures 27A et 27B.

Le moteur 5 étant directement intégré et logé dans une roue 41 du mécanisme de transmission, il n'est plus nécessaire d'utiliser une courroie 51 d'entraînement entre un arbre moteur 50 et un barbotin 813. Le mécanisme d'entraînement 4 est alors ici formé par l'enveloppe extérieure de la roue menante configurée pour entraîner la chenille 32, par exemple avec un contour cranté sur sa périphérie.

Ce moteur-roue peut être disposé à la même place que le barbotin en référence au figures précédentes, c'est-à-dire porté par le bogie supérieur 81, au niveau de son arbre avant, en B (voir la figure 28).

Un tel ensemble, appelé « moteur-roue » qui comprend un moteur incorporé dans une roue (donc entraînement direct), présente notamment les avantages suivants :
- pas de transmission indirecte nécessaire de type chaîne ou courroie 51, ce qui représente un gain en nombre de pièce (donc un gain de masse et de temps de montage), une diminution de la maintenance et du bruit ;
- Pas de transmission indirecte de type chaîne ou courroie 51 exposé à l'environnement extérieur, d'où une amélioration de la fiabilité ;
- le moteur 5 est combiné à la roue ce qui représente un encombrement réduit.

Sur les motoneiges à entraînement indirect, à savoir notamment avec une courroie 51 ou une chaîne interposée entre l'arbre moteur 50 et le barbotin 813, ledit barbotin est situé de préférence à l'avant du bogie supérieur 81 (point B), le moteur étant quant-à-lui situé dans le corps de la motoneige (entre la selle et la chenille). Cette disposition présente les avantages suivants :
- l'angle que fait la chenille 32 au niveau du barbotin est aigu. La surface de contact (et donc l'effort transmissible) entre le barbotin 813 et la chenille 32 est ainsi plus grande que si le barbotin 813 était placé au niveau d'un angle obtus.
- le barbotin est placé sur le bogie supérieur, qui, comme le moteur, est solidaire du châssis. L'axe moteur et l'axe barbotin sont donc fixes l'un par rapport à l'autre (en négligeant les déformations structurales ou rattrapage de jeux mécaniques). Une chaîne, un pignon, et une couronne suffisent donc à transmettre l'effort du moteur 5 au barbotin 813.

Il n'y a pas d'autre position (que la position au point B) garantissant les deux conditions précédentes :
- les points A et C, qui forment respectivement l'axe du renvoi avant de la chenille 32 au niveau du bogie inférieur 82 et l'axe du renvoi arrière de la chenille 32 au niveau du bogie supérieur 81, sont à exclure car ils correspondent à des angles obtus, la faible surface de contact barbotin/roue ne permettrait pas de passer d'efforts importants ;
- les point D et A, qui forment les axes de renvois avant et arrière de la chenille 32 au niveau du bogie inférieur 82, sont à exclure car ils sont placés sur le bogie inférieur 82. Les bogies supérieur 81 et inférieur 82 étant mobiles l'un par rapport à l'autre sur une motoneige classique (cette mobilité participant à la suspension arrière de la motoneige), l'entraxe entre le moteur et le barbotin ne serait donc pas fixe (sauf cas particuliers). Transmettre un effort entre le moteur et le barbotin 813 nécessiterait un mécanisme complexe (mécanisme à deux chaînes, deux pignons et deux couronnes, ou mono-chaine équipée d'un tendeur à grand débattement afin de compenser les variations d'entraxe, etc.), et gourmand en masse, en temps de montage et en maintenance.

On notera en outre que le fait de placer un moteur classique (non roue), le barbotin et une transmission à chaîne (ou courroie) sur le bogie inférieur 82 peut s'avérer complexe en termes d'encombrement, de masse non suspendue, et d'étanchéité. En effet, la plupart des moteurs électriques classiques présentent des ouvertures d'aérations non étanches, en particulier pour en assurer le refroidissement et éviter la surchauffe.

Cette disposition avec un moteur classique (barbotin 813 en B, le point B formant l'axe du renvoi avant de la chenille 32 au niveau du bogie supérieur 81) présente toutefois les désavantages suivants :
- en marche avant, le brin tendu de la chenille 32 (à savoir le brin qui va de B vers A en passant par C puis D) a une trajectoire qui comprend deux changements de direction (en C et en D). Les roues libres (en C et D) qui permettent ces changements de direction du brin tendu sont soumises à des efforts (et des frottements) importants, ce qui représente une perte énergétique et donc une diminution du rendement. De même l'énergie nécessaire pour faire fléchir le brin tendu autour des roues (C et D) représente également une perte énergétique et une diminution du rendement (dans le cas des chenilles en caoutchouc non articulées).
- en marche avant, le brin tendu exerce un effort sur le bogie inférieur 82 au niveau du point D (selon la bissectrice de l'angle CDA), repris par le sol S (effort vertical) en avant du bogie (proche du point A), ainsi que par les bielles reliant les bogies supérieur 81 et inférieur 82. L'effort exercé par le sol S augmente les frottements entre la chenille 32 et le bogie inférieur 82 dans la zone du point A, ce qui se traduit par une diminution du rendement.

Dans le cas d'un moteur-roue 41, outre les avantages intrinsèques au moteur-roue précités, le moteur-roue 41 appliqué à la motoneige présente les avantages suivants dans la configuration où le moteur-roue est placé en D, à savoir solidaire du bogie inférieur et placé en arrière de celui-ci (voir la figure 29) :
- en marche avant, le brin tendu entre les points A et D, situé sous le bogie inférieur 82 a une trajectoire qui ne comprend aucun changement de direction : cela augmente le rendement par rapport à la disposition d'un entraînement indirect ;
- en marche avant, le brin tendu n'exerce pas d'effort significatif sur le bogie inférieur 82 : il n'a y a donc pas d'augmentation de l'effort vertical du sol en avant du bogie inférieur 81 ce qui augmente le rendement par rapport à la disposition d'un entraînement indirect ;
- le moteur-roue 41 étant directement refroidi par le contact avec la neige, les risques de surchauffe sont réduits (avantage par rapport aux moteurs placé dans le corps de la motoneige et refroidi uniquement par l'air, et par rapport aux moteurs-roues équipant les véhicules terrestres non destinés à l'évolution sur neige) ;
- le moteur-roue 41 n'étant pas situé dans le corps de la motoneige, le carter de la motoneige 1 est donc simplifié (pas de circuit d'aération, pas d'élément d'étanchéité dynamique pour l'arbre moteur, et peut être totalement clôt (pas de risque de court-circuit), simplicité de montage, réduction de la maintenance ;
- l'arbre 812 n'est plus nécessairement monté rotatif par rapport au bogie supérieur, ni au châssis 31, ce qui diminue le nombre de pièce, et simplifie le montage et la maintenance du véhicule. Les roues libres en B sont alors montées sur roulement par rapport à l'arbre 812.
- la masse du moteur-roue n'est pas suspendue, mais n'est pas directement soumise aux chocs lors des irrégularités de terrain, car le moteur est situé à l'arrière du bogie inférieur qui le protège d'une partie des chocs : le moteur-roue est avantageusement rehaussé par rapport à la ligne de contact bogie inférieur 82/chenille 32, afin de ne pas être en contact avec le sol (par l'intermédiaire de la chenille 32) ce qui permet de le protéger d'avantage des chocs directs.

Plus précisément, dans ce mode de réalisation, le moteur-barbotin est un moteur roue-conventionnel, auquel on aura retiré les rayons ou pneu, et auquel on rend solidaire un pignon d'entraînement (ou barbotin). Les éléments entraînants du barbotin formant mécanisme de transmission 4 (dents ou crans par exemple, voir les figures 27A et 27B) sont conçus pour être mis en prise avec les éléments entraînés de la chenille. L'arbre du moteur-barbotin est fixe par rapport au bogie inférieur 81 du véhicule 1.

Les principales différences de ce mode de réalisation par rapport au véhicule à entraînement indirect, sont en substance les suivantes :
- le carter du bloc moteur et solidaire du châssis 31 ne contient pas de moteur 5, celui-ci étant en prise direct sur la chenille 32 ;
- le moteur-barbotin 41 est toutefois relié par des câbles étanches aux autres organes de puissance (contrôleur, batteries, électronique) situés dans le carter solidaire du châssis ;
- l'arbre 5 du moteur-roue 41 ou moteur-barbotin 41, non tournant dans le référentiel du véhicule 1, est solidaire du bogie inférieur 82 ;
le freinage du véhicule 1 est assuré par l'intermédiaire d'un frein tel qu'un frein à disque solidaire de la partie tournante du moteur-barbotin 41, et dont les mâchoires sont solidaires d'un point fixe du bogie inférieur 82.

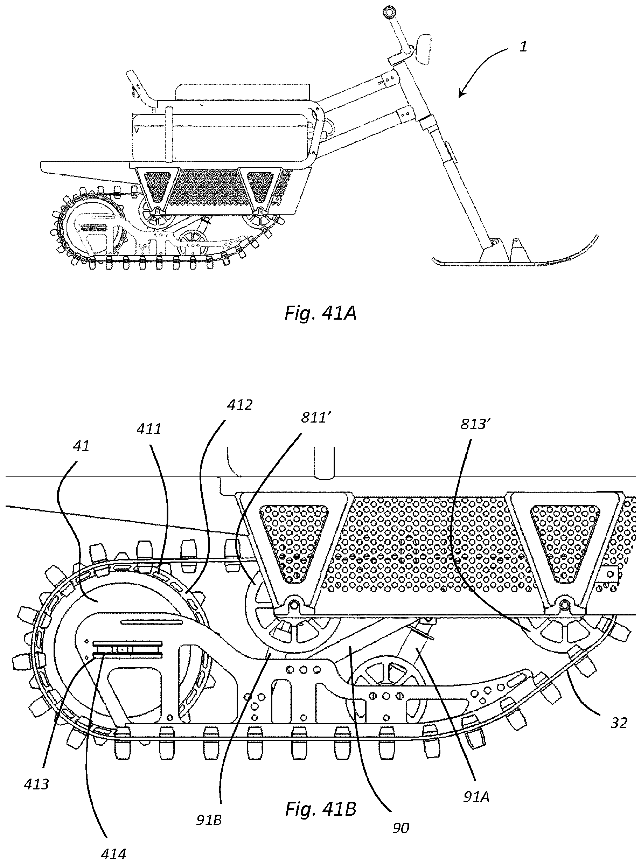

Selon la configuration illustrée les figures 41A et 41B, le châssis 31 comporte au moins quatre demi trous oblongs sur sa partie inférieure, ici au nombre de quatre soit deux de chaque côté, en particulier sur son bord libre inférieur, ainsi qu'une surépaisseur (ou bord tombé) formée par une extrusion transversale par rapport au châssis 31. Les axes avant (B) et arrière (C) du boggie supérieur 81 ont leurs deux extrémités filetées, permettant la fixation d'un écrou et d'une rondelle (non représentés). Les demi trous oblongs ouverts vers le bas peuvent alors accueillir chacune une extrémité d'un des axes (B), (C) du boggie supérieur 81, et le serrage des (au moins) quatre écrous rend alors le bogie supérieur 81 solidaire au châssis 31. La surépaisseur (ou bord tombé) au voisinage des demi trous oblongs permet d'assurer le maintien de la liaison (par blocage en translation des écrous/rondelles) en cas de léger dévissage des écrous). Lorsque les quatre fixations sont ôtées, le châssis 31 se démonte facilement du train chenillé en le soulevant verticalement.

Comme pour le véhicule à entraînement indirect, le bogie inférieur 82 est relié au bogie supérieur 81 par mécanisme de suspension 80, en particulier au minimum une bielle et une suspension, placées de façon à minimiser la variation de périmètre de la chenille 32 lors du mouvement relatif des bogies supérieur 81 et inférieur 82. Une configuration présentant cet avantage est illustrée figure 35.

Comme pour le véhicule à entraînement indirect, il existe une variante à fourche amortie.

Les figures 30, 31, 32, 33, 34 et 35 illustrent des vues générales et détaillées d'un véhicule motorisé 1 selon une variante de réalisation.

En particulier, le bras avant 24 de la partie avant 2 comporte une colonne montée rotative, à l'intérieur d'un tube de direction solidaire de la tringlerie 23. La partie avant 2 comporte en outre un amortisseur ou suspension 20 disposé entre le bras avant 24 et le ski 21. Plus précisément, l'extrémité inférieure du bras avant 24 présente une fourche sur laquelle est adaptée la suspension 20. La tringlerie 23 est configurée pour être démontable et formée d'une pluralité d'éléments ou pièces. Cela permet à la tringlerie 23 d'être démontée et conditionnée sous forme de kit pour son transport.

Ces pièces sont reliées entre elles par emmanchement dans ce mode de réalisation, et sécurisées par des moyens de fixation mécaniques amovibles, de préférence comparables au moyen de liaison amovible de sorte à ce que toutes ces pièces soient démontables aisément.

La tringlerie 23 de la partie avant 2 est reliée au châssis 31 de la partie arrière 3 par la liaison mécanique amovible 6.

Cette fixation amovible comprend deux liaisons pivots superposées verticalement et reliées à la tringlerie 24. Du fait de la présence des deux liaisons pivots entre la tringlerie 23 de la partie avant 2 et le châssis 31 de la partie arrière, aucun degré de liberté n'existe entre ces deux ensembles, la tringlerie 23 n'ayant pas de degré de liberté interne. Un moyen de préhension 61 équipe chacune de ces deux liaisons pivot, ce moyen de préhension comprenant poignée dite papillon solidaire de l'axe pivot et sécurisée par un bouton poussoir.

Alternativement ou en complément, les liaisons mécaniques amovibles 6 de cette variante de réalisation comprennent un moyen de fixation mécanique amovible, par exemple de type vis-écrou, qui peut être démonté avec un outillage simple, tel qu'un tournevis standard

Dans cette configuration, le véhicule motorisé comporte un moteur-roue 41.

L'arbre du moteur-roue 41 (solidaire du stator du moteur) est ici solidaire du bogie inférieur 82 (aussi appelé rail ou glissière). Le bogie inférieur 82 est donc soumis aux efforts antagonistes (3^{ième} loi de Newton) des efforts exercés par le moteur-roue 41 sur la chenille 32.

Au niveau de la liaison arbre/ bogie inférieur 82, ce torseur est composé du couple moteur et de la force de propulsion. Ces efforts s'équilibrent via le bogie supérieur 81 (par l'intermédiaire des bielles 90 et/ou suspensions 91) et le la réaction verticale du sol S. Cette réaction du sol S engendre une augmentation locale des frottements qui se traduit par une baisse du rendement.

Afin de limiter ce phénomène et garantir une pression de contact homogène entre le bogie inférieur 82 et la chenille 32, on cherche à diminuer au maximum la composante verticale de la réaction du sol S sur le bogie inférieur 82 sous les efforts moteur.

Dans le contexte, il est avantageux de placer le CVR sur une droite appelée « ligne d'effort chenille » L (voir la figure 35) colinéaire à la résultante des efforts de propulsion exercée par le moteur-roue 41 sur la chenille 32 (voir la figure 35, sur laquelle cette droite est considérée comme horizontale). La réaction verticale du sol S est ainsi nulle. Des moyens de réglages tels des trous oblongs au niveau des liaisons bogie inférieur 82/bielle, bogie inférieur 82/suspension permettent le déplacer le CVR au-dessus ou en dessous de cette droite d'équilibre L. Cela présente l'avantage de pouvoir régler la répartition de pression le long du bogie inférieur 82 sous les efforts moteur, et de pouvoir choisir de charger/décharger l'avant ou l'arrière du bogie inférieur 82, en fonction par exemple de la position du centre de gravité de la masse embarquée (notamment le pilote et le cas échéant le ou les passager(s)).

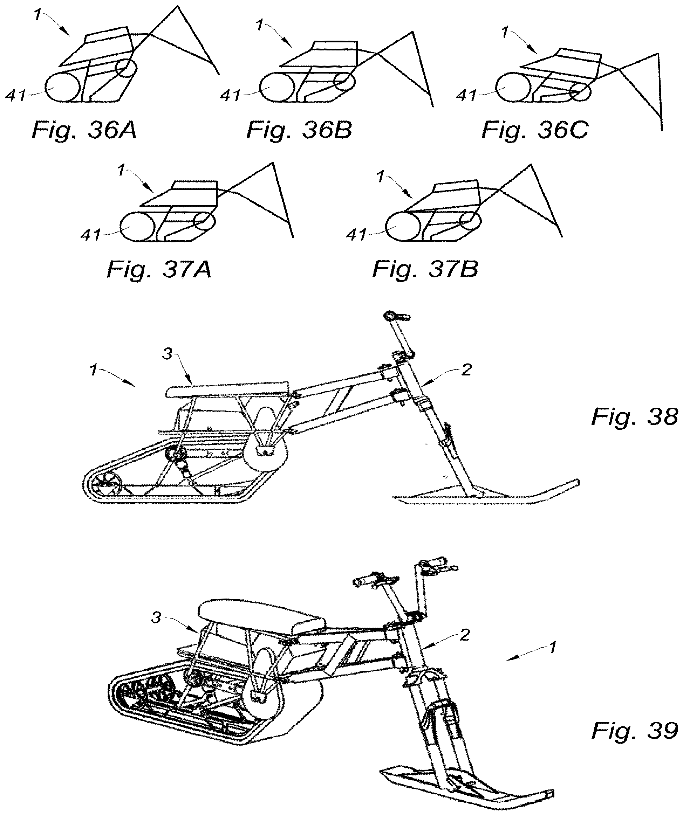

Une disposition avantageuse consiste à réaliser la configuration à chenille triangulaire, c'est-à-dire dans ce contexte avec trois points de renvois de la chenille 32, de la façon suivante :
- un entraînement au sommet inférieur arrière de la chenille 32, à l'arrière du bogie inférieur 82, via le moteur-roue 41 comme illustré sur ces figures ;
- une roue libre 813' au sommet avant supérieur, à l'avant du bogie supérieur 81, relié par une bielle 90 au bogie inférieur 82, appelée « bielle avant ».
- une roue libre 811' « en attente » placée à l'arrière du bogie supérieur 81. Cette roue 811' ne travaille pas en configuration normale de fonctionnement, mais dans certaines configurations, comme des cassures de pentes importantes (figure 36C) ou pour stabiliser le brin mou à haute vitesse de rotation de chenille 32. Une telle roue libre ne change donc pas ici la nature triangulaire de la chenille 32 en usage standard.

Outre les avantages de l'entraînement arrière précédemment cités, cette configuration triangulaire présente l'avantage d'avoir un périmètre de chenille ne dépendant que d'un degré de liberté unique : l'angle entre le bogie inférieur 82 et la bielle avant 90. Le périmètre de la chenille 32 est donc indépendant de l'angle entre les bogies inférieur et supérieur (dans la configuration dite normale ou la roue arrière du bogie supérieur est en attente). Il est alors possible de placer une suspension 91 entre le bogie supérieur 81 et inférieur 82 pour amortir le véhicule, sans que sa compression/détente n'entraîne une détente/tension de la chenille 32 (voir les figures 37A et 37B).

Enfin, dans la configuration détaillée ci-dessus, cette suspension travaille en traction et non en compression sous les efforts moteur en marche avant, ce qui évite une perte énergétique inutile.

Le pivot inférieur de la bielle avant 90 est positionné de façon à limiter la variation de périmètre de chenille 32 à une valeur garantissant le bon entraînement de la chenille 32 par le barbotin, lorsque le bogie inférieur décrit l'ensemble des positions possibles par rapport au bogie supérieur 81 selon le degré de liberté unique précédemment cité. Cela permet de ne pas avoir à équiper la chenille 32 de tendeur dynamique (gain en masse, en maintenance, en fiabilité).

Le réglage statique de la tension de la chenille 32 se fait grâce aux trous oblongs du bogie inférieur 82 (liaison bogie inférieur 82/moteur-roue 41 ou bogie inférieur 82/bielle 90). Un système vis/écrou permet le blocage en translation des axes moteur et bielles à la position désirée.

Dans une variante (figure 41B) de la configuration à chenille triangulaire précédente, le point d'accroche (pivot) de la bielle 90 au bogie supérieur 81 est reculé par rapport à la roue libre 813', et une suspension supplémentaire 91A pourra être placée en amont de la bielle 90. Dans une configuration technique particulière, ce point de pivot est placé à équidistance (variable dans une plage de +/-20% de la longueur du bogie supérieur 81 par rapport à ce point équidistant) des roues avant 813' et arrière 811' du bogie supérieur 81, et est situé à proximité (moins de 10% de la longueur du bogie supérieur 81) du pivot supérieur de la suspension avant 91A. Ainsi, lors de la décompression de la suspension arrière 91B (par exemple lors d'une cassure de pente), la rotation relative des bogies supérieur 81 et inférieur 82 sera autour d'un CVR placé proche du milieu du bogie supérieur 81. Le mouvement de la roue libre 813' à tendance à détendre la chenille 32, alors que celui de la roue 811' (qui était en attente) vient tendre la chenille 32. Cette configuration limite la variation de périmètre de la chenille lors des cassures de pente, et ainsi le broutage du barbotin.

Dans une configuration particulière de la variante (figure 41B), l'axe formé par la suspension arrière (axe passant par les deux pivots de la suspension) et l'axe de la bielle 90 (axe passant par les deux pivots de la bielle 90) se croisent sur un point placé (ou proche) de la bissectrice de l'angle avant supérieur de la chenille 32 (celui formé par la roue libre 813'). Ainsi, lors de la compression/décompression de la suspension avant (par exemple lors d'une irrégularité de terrain), la rotation relative des bogies supérieur 81 et inférieur 82 sera autour d'un CVR placé proche de cette bissectrice. Cette configuration limite la variation de périmètre de la chenille 32 lors des cassures de pente, et ainsi le broutage du barbotin.

Dans une configuration particulière de la variante (figure 41B), le pivot supérieur de la suspension arrière est coaxial à la roue 811'.

La translation du moteur-barbotin 41 (et donc du frein à disque solidaire de la partie tournante du moteur-barbotin 41) par rapport au boggie inférieur 82 (et donc aux mâchoires du frein à disque, solidaires de ce dernier) entraîneraient un éloignement du disque par rapport aux mâchoires, et donc un mauvais freinage (réduction de leur surface de contact). Avantageusement, les mâchoires du frein à disque, solidaires du bogie inférieur 82, pourront donc également être translatées par l'intermédiaire de trous oblongs sur le boggie inférieur 82 au niveau de zones 410. Un système vis/écrou permet le blocage en translation des mâchoires à la position désirée.

Le moteur-roue 41 ou moteur barbotin peut être soumis à des chocs directs (par exemple causés par une irrégularité de terrain), et ce malgré la rehausse du moteur 5 par rapport au sol. Ces chocs pouvant dégrader des éléments internes du moteur 5 (électroniques ou mécaniques), des alvéoles 411 pourront être réalisées sur la circonférence de la roue 41 ou barbotin (sur une bande située entre les périphéries extérieure et intérieure du barbotin). La fonction de ces alvéoles 411 est de réduire la raideur radiale de la roue 41. La matière restante entre deux alvéoles successives est appelée raidisseur 412. Ces alvéoles 411 sont de préférence réparties régulièrement sur le pourtour annulaire de la roue 41.

L'ajout d'alvéoles 411 réduit nécessairement la raideur en torsion de la roue 41, et donc son rendement mécanique pour la transmission des efforts moteur. Cela peut avoir un impact significatif sur l'autonomie du véhicule 1.

On choisira donc une forme d'alvéole 411 qui favorise la réduction de la raideur radiale de la roue 41 (pour amortir les chocs radiaux) plutôt que la réduction de sa raideur en torsion (pour limiter la baisse de rendement mécanique du moteur-roue 41).

Une solution avantageuse est de choisir une forme d'alvéole 411 telle que les raidisseurs 412 soit inclinés par rapport à la direction radiale de la roue 41. Ainsi les raidisseurs travaillent en flexion sous les chocs directs issus des irrégularités de terrain, et travaillent en traction/compression sous les efforts moteur. Si les raidisseurs 412 étaient orientés selon la direction radiale de la roue 41, ils travailleraient uniquement en compression sous les chocs directs issus des irrégularités de terrain, et travailleraient en flexion sous les efforts moteur. La raideur d'une poutre pleine étant plus faible en flexion qu'en traction/compression, la solution à raidisseurs inclinés est donc plus avantageuse.

La figure 41A illustre une telle forme d'alvéole 411.

Le moteur-roue 41 ou moteur barbotin peut être soumis à des chocs directs ainsi qu'à de fortes accélérations verticales (par exemple à la réception de sauts). Ces chocs pouvant dégrader des éléments internes du moteur 5 (électroniques ou mécanique) des joints 413 à faible module d'Young (inférieur à 10GPa, par exemple en élastomères) sont placées entre l'axe du moteur 5 et les boggies inférieurs 82 (en particulier dans le trou oblong des boggies inférieurs). La fonction de ces joints 413 est de réduire la raideur verticale (selon Z motoneige) de la liaison moteur 5 - bogie 8.

Il ne serait pas judicieux de placer directement ces joints 413 contre l'axe de l'arbre, car ils materaient sous le couple moteur, et cela réduirait le rendement mécanique de la liaison moteur 5 - bogie 8 (et donc couple maximum transmissible). C'est pourquoi on placera des plaquettes 414 d'un matériau plus dur que celui des joints 413, entre l'axe du moteur et ces dernières. Ces plaquettes ont pour fonction de faire travailler une plus grande longueur de joint sous les efforts moteur (réduction du matage par augmentation de la surface) et d'augmenter le bras de levier de la reprise du couple moteur par le joint (réduction du matage par diminution de l'effort).

L'axe moteur est donc placé dans la configuration sandwich suivante :
bogie 8 - joint 413 - plaquette 414 - Axe moteur - plaquette 414 - joint 413 - bogie 8.

Les figures 38 et 39 illustrent des vues de côté et en perspective d'un véhicule motorisé selon un autre mode de réalisation. En particulier, dans ce mode de réalisation, la partie avant 2 est comparable à celle décrite en référence aux figures 30 à 33, et la partie arrière 3 présentant un entraînement indirect comparable à celui décrit précédemment.

De manières générales, quel que soit le mode de réalisation retenu, les frottements aux liaisons pivot pourront être réduits par l'utilisation de coussinets.

L'invention décrite ci-avant comporte ainsi un grand nombre d'avantages.

Le format du véhicule motorisé offre par exemple un certain nombre d'avantages à son utilisateur.

L'assise de l'utilisateur est basse et il est possible pour les utilisateurs de mettre les deux pieds au sol offrant une sensation de sécurité. Cela rend le véhicule plus accessible au grand public que les motoneiges classiques.

La partie avant du véhicule dissociable de la partie arrière sans outil ce qui rend possible le transport en voiture ou transport public.

Tous les organes lourds (moteur, batterie et autres organes de puissance) sont placés dans la partie arrière qui peut être équipée de roulettes (sans outil) ce qui facilite le transport à pieds.

La partie avant est démontable afin de pouvoir être simplement transportable dans un sac à dos en toile étanche

De préférence, la partie arrière 3 est autosupportée. En effet, si la répartition des éléments du bloc arrière est telle que son centre de gravité est situé au-delà de la verticale du point de contact sol/chenille le plus avancé, un basculement aurait lieu lors du démontage du bloc avant. Pour pallier cela, on placera deux pieds entre l'axe B et le sol (les roues de transport avant sont alors inutiles).

La partie arrière présente un dispositif permettant de lui fixer des roulettes escamotables ainsi qu'une poignée

L'utilisateur peut alors déplacer l'engin en faisant rouler la partie arrière et en portant la partie avant. La partie avant pourra également être fixée sur la partie arrière afin d'éviter à l'utilisateur de porter un sac lors du transport de l'engin. La partie arrière pourra être revêtue d'une housse en toile étanche afin de contenir, lors du transport ou du stockage, la neige, eau, boue ou autres particules ayant souillé l'engin pendant son utilisation. La conception de l'engin est faite de sorte que l'utilisateur pourra simplement passer du mode dit « transport » au mode « conduite » en quelques minutes.

L'utilisateur pourra passer du mode « transport » au mode « conduite » et vice-versa sans aucun autre élément que les roulettes de transport et leur dispositif de fixation, le sac de rangement de la partie avant, et l'éventuelle housse de protection de la partie arrière. Ces différents accessoires de transport pouvant être contenus dans le sac à dos de la partie avant, l'utilisateur pourra les transporter avec lui lorsque qu'il conduira l'engin. Ce dispositif est imaginé pour pouvoir permettre aisément à l'utilisateur de passager du mode « conduite » au mode « transport » et inversement au cours de l'utilisation de l'engin. Cela participe à la caractéristique de l'engin d'être nomade. Par exemple, cela permet à l'utilisateur de pouvoir stocker l'engin dans son appartement, de déplacer l'engin jusqu'à sa voiture garée au parking, ou d'utiliser une télécabine, un ascenseur, ou autre transport public avec l'engin.

Son format offre également de nouvelles perspectives commerciales telles que la vente par correspondance.

La motorisation électrique est également avantageuse en ce qu'elle est silencieuse ce qui le rend adapté à la circulation urbaine et nocturne par exemple, et non polluant lui permettant des accès aux parcs naturels protégés.

Par ailleurs, le couple d'un moteur électrique pouvant être très important au démarrage, le véhicule n'est pas équipé de boite de vitesse comme pour un véhicule thermique, ce qui lui confère un gain en masse.

Par ailleurs, la cinématique du véhicule est configurée pour lui assurer une haute franchissabilité, sans avoir à prendre de l'élan garantissant à son utilisateur une conduite plus souple et adaptée au grand public.

Les liaisons pivots équipant la partie avant permettent de faire travailler en traction/compression les éléments du châssis plutôt qu'en flexion permettant également un gain en masse.

L'invention est décrite dans ce qui précède à titre d'exemple. Il est entendu que l'homme du métier est à même de réaliser différentes variantes de réalisation de l'invention sans pour autant sortir du cadre de l'invention telle que définie dans les revendications.

## Revendications

1. Véhicule motorisé (1), comprenant une partie avant (2) munie d'au moins un patin directeur (21) destiné à être dirigé par un guidon (22), une partie arrière (3) comprenant un châssis (31) solidaire d'un moyen de propulsion (32) de type chenille et entraîné par un mécanisme de transmission (4) configuré pour être mû par un moteur (5), le moteur (5) étant logé dans une roue (41) du mécanisme de transmission (4) formant une roue d'entraînement du moyen de propulsion (32), le moyen de propulsion (32) étant supporté par un bogie (8), le véhicule motorisé étant **caractérisé en ce que** le bogie comporte un bogie supérieur (81) solidaire du châssis (31) et un bogie inférieur (82) reliés ensemble par un mécanisme de suspension (80), le bogie inférieur (82) présentant au moins un degré de liberté par rapport au bogie supérieur (81), ladite roue (41) du mécanisme de transmission (4) formant une roue d'entraînement du moyen de propulsion (32) étant solidaire du bogie inférieur (82), à l'arrière de celui-ci.

2. Véhicule motorisé (1) selon la revendication 1, **caractérisé en ce qu'**il comprend une liaison mécanique (6) pour relier mécaniquement la partie avant (2) avec la partie arrière (3), la liaison mécanique (6) étant amovible.

3. Véhicule motorisé (1) selon la revendication 2, **caractérisé en ce qu'**il comprend un moyen de préhension (61) configuré pour permettre le montage et le démontage manuel de la liaison mécanique (6).

4. Véhicule motorisé (1) selon l'une quelconque des revendications précédentes, **caractérisé en ce que** le moteur (5) est un moteur électrique alimenté par une batterie.

5. Véhicule motorisé (1) selon l'une quelconque des revendications précédentes, **caractérisé en ce que** la partie avant (2) comprend une tringlerie (23) formant cadre, la liaison mécanique amovible (6) reliant la tringlerie (23) de la partie avant (2) au châssis (31) de la partie arrière (3).

6. Véhicule motorisé (1) selon la revendication 5, **caractérisée en ce que** la partie avant (2) comporte un bras avant (24), par exemple de type fourche, relié d'un côté au patin directeur (21) et de l'autre côté au guidon (22), la tringlerie (23) étant solidaire du bras avant (24) et configurée de sorte à être démontable et/ou articulée pour être pliable.

7. Véhicule motorisé (1) selon l'une quelconque des revendications précédentes, **caractérisé en ce que** la liaison mécanique amovible (6) est articulée de sorte à assurer une liaison pivot d'axe horizontal s'étendant transversalement par rapport à un axe longitudinal (L) de référence du véhicule.

8. Véhicule motorisé (1) selon l'une quelconque des revendications précédentes, **caractérisé en ce que** le guidon (22) comporte des moyens de commande électrique (220) du moteur (5) et **en ce que** le véhicule motorisé (1) comprend un dispositif de liaison électrique (7) entre la partie avant (2) et la partie arrière (3).

9. Véhicule motorisé (1) selon l'une quelconque des revendications précédentes, **caractérisé en ce que** la partie arrière (3) est autosupportée.

10. Véhicule motorisé (1) selon l'une quelconque des revendications précédentes, **caractérisé en ce que** le degré de liberté du bogie inférieur (82) par rapport au bogie supérieur (81) est de préférence une rotation autour d'un axe instantané de rotation, de préférence situé longitudinalement par rapport au véhicule motorisé (1) dans une zone située au droit d'une surface de contact du moyen de propulsion avec le sol (S).

11. Véhicule motorisé (1) selon l'une quelconque des revendications précédentes, **caractérisé en ce que** dans une position de rangement, une mesure combinée d'une longueur et d'une circonférence du véhicule est inférieure ou égale à 419 cm.

12. Véhicule motorisé (1) selon l'une quelconque des revendications précédentes, **caractérisé en ce que** le bogie est configuré pour que la chenille soit triangulaire, c'est à dire présentant trois renvois.

13. Véhicule motorisé (1) selon l'une quelconque des revendications précédentes, **caractérisé en ce que** la roue (41) du mécanisme de transmission (4) à l'intérieure de laquelle est logé le moteur (5) comprend sur sa circonférence, une pluralité d'alvéoles (411) séparées par des raidisseurs (412), les raidisseurs (412) étant de préférence inclinés par rapport à une direction radiale de la roue (41).

14. Véhicule motorisé (1) selon l'une quelconque des revendications précédentes, **caractérisé en ce que** la roue (41) du mécanisme de transmission (4) à l'intérieure de laquelle est logé le moteur (5) est portée par un axe relié au bogie inférieur (82), au moins un joint (413) d'amortissement étant disposé entre l'axe de la roue (41) et le bogie inférieur (82), de préférence accompagné d'au moins une plaquette (414) d'un matériau plus dur que le joint (413).

15. Véhicule motorisé (1) selon l'une quelconque des revendications précédentes, **caractérisé en ce que** le châssis (31) comporte au moins quatre demi trous oblongs configurés pour recevoir des portions, de préférences situées aux extrémités, d'au moins deux axes portés par le bogie (8), de préférence par le bogie supérieur (81).

## Patentansprüche

1. Motorfahrzeug (1), umfassend einen vorderen Teil (2), der mit mindestens einem Gleitschuh (21) versehen ist, der dafür bestimmt ist, durch eine Lenkstange (22) geführt zu werden, einen hinteren Teil (3), umfassend ein Fahrgestell (31), das mit einem Antriebsmittel (32) einer Raupenfahrwerkart fest verbunden ist und durch einen Übertragungsmechanismus (4) getrieben wird, der zum Bewegtwerden durch einen Motor (5) konfiguriert ist, wobei der Motor (5) in einem Rad (41) des Übertragungsmechanismus (4) untergebracht ist, der ein Triebrad des Antriebsmittels (32) ausbildet, wobei das Antriebsmittel (32) durch ein Drehgestell (8) getragen wird, wobei das Motorfahrzeug **dadurch gekennzeichnet ist, dass** das Drehgestell ein oberes Drehgestell (81), das mit dem Fahrgestell (31) fest verbunden ist, und ein unteres Drehgestell (82) aufweist, die durch einen Aufhängungsmechanismus (80) miteinander verbunden sind, wobei das untere Drehgestell (82) mindestens einen Freiheitsgrad relativ zu dem oberen Drehgestell (81) vorweist, wobei das Rad (41) des Übertragungsmechanismus (4) ein Triebrad des Antriebsmittels (32) ausbildet, das mit dem unteren Fahrgestell (82) an dessen Hinterseite fest verbunden ist.

2. Motorfahrzeug (1) nach Anspruch 1, **dadurch gekennzeichnet, dass** es eine mechanische Verbindung (6) zum mechanischen Verbinden des vorderen Teils (2) mit dem hinteren Teil (3) umfasst, wobei die mechanische Verbindung (6) lösbar ist.

3. Motorfahrzeug (1) nach Anspruch 2, **dadurch gekennzeichnet, dass** es ein Greifmittel (61) umfasst, das zum Ermöglichen der manuellen Montage und Demontage der mechanischen Verbindung (6) konfiguriert ist.

4. Motorfahrzeug (1) nach einem der vorstehenden Ansprüche, **dadurch gekennzeichnet, dass** der Motor (5) ein batteriebetriebener Elektromotor ist.

5. Motorfahrzeug (1) nach einem der vorstehenden Ansprüche, **dadurch gekennzeichnet, dass** der vordere Teil (2) ein Gestänge (23) umfasst, das einen Rahmen ausbildet, wobei die lösbare mechanische Verbindung (6) das Gestänge (23) des vorderen Teils (2) mit dem Fahrgestell (31) des hinteren Teils (3) verbindet.

6. Motorfahrzeug (1) nach Anspruch 5, **dadurch gekennzeichnet, dass** der vordere Teil (2) einen vorderen Arm (24), beispielsweise einer Gabelart, aufweist, der auf einer Seite mit dem Gleitschuh (21) und auf der anderen Seite mit der Lenkstange (22) verbunden ist, wobei das Gestänge (23) mit dem vorderen Arm (24) fest verbunden und konfiguriert ist, um zum Biegsamsein demontierbar und/oder gelenkig zu sein.

7. Motorfahrzeug (1) nach einem der vorstehenden Ansprüche, **dadurch gekennzeichnet, dass** die lösbare mechanische Verbindung (6) gelenkig ist, um eine Schwenkverbindung mit einer horizontalen Achse zu gewährleisten, die sich quer relativ zu einer Referenzlängsachse (L) des Fahrzeugs erstreckt.

8. Motorfahrzeug (1) nach einem der vorstehenden Ansprüche, **dadurch gekennzeichnet, dass** die Lenkstange (22) Mittel (220) zum elektrischen Steuern des Motors (5) aufweist und dass das Motorfahrzeug (1) eine Vorrichtung zum elektrischen Verbinden (7) zwischen dem vorderen Teil (2) und dem hinteren Teil (3) umfasst.

9. Motorfahrzeug (1) nach einem der vorstehenden Ansprüche, **dadurch gekennzeichnet, dass** der hintere Teil (3) selbsttragend ist.

10. Motorfahrzeug (1) nach einem der vorstehenden Ansprüche, **dadurch gekennzeichnet, dass** der Freiheitsgrad des unteren Drehgestells (82) relativ zu dem oberen Drehgestell (81) vorzugsweise eine Drehung um eine Drehmomentanachse herum ist, die vorzugsweise in Längsrichtung relativ zu dem Motorfahrzeug (1) in einer Zone gelegen ist, die direkt unter einer Kontaktoberfläche des Antriebsmittels mit dem Boden (S) gelegen ist.

11. Motorfahrzeug (1) nach einem der vorstehenden Ansprüche, **dadurch gekennzeichnet, dass** in einer Parkposition ein kombiniertes Maß einer Länge und eines Umfangs des Fahrzeugs kleiner als oder gleich 419 cm ist.

12. Motorfahrzeug (1) nach einem der vorstehenden Ansprüche, **dadurch gekennzeichnet, dass** das Drehgestell konfiguriert ist, damit das Raupenfahrwerk dreieckig ist, das heißt drei Zwischengetriebe vorweist.

13. Motorfahrzeug (1) nach einem der vorstehenden Ansprüche, **dadurch gekennzeichnet, dass** das Rad (41) des Übertragungsmechanismus (4), in dem der Motor (5) untergebracht ist, an seinem Umfang eine Vielzahl von Zellen (411) umfasst, die durch Versteifungsrippen (412) getrennt sind, wobei die Versteifungsrippen (412) vorzugsweise relativ zu einer radialen Richtung des Rads (41) geneigt sind.

14. Motorfahrzeug (1) nach einem der vorstehenden Ansprüche, **dadurch gekennzeichnet, dass** das Rad (41) des Übertragungsmechanismus (4), in dem der Motor (5) untergebracht ist, durch eine Achse gestützt wird, die mit dem unteren Fahrgestell (82) verbunden ist, wobei mindestens eine Dämpfungsdichtung (413) zwischen der Radachse (41) und dem unteren Drehgestell (82) angeordnet ist, vorzugsweise begleitet von mindestens einer Platte (414) aus einem Material, das härter als die Dichtung (413) ist.

15. Motorfahrzeug (1) nach einem der vorstehenden Ansprüche, **dadurch gekennzeichnet, dass** das Fahrgestell (31) mindestens vier längliche Halblöcher aufweist, die zum Aufnehmen von Abschnitten, die vorzugsweise an den Enden gelegen sind, von mindestens zwei Achsen konfiguriert sind, die durch das Drehgestell (8), vorzugsweise durch das obere Drehgestell (81), gestützt werden.

## Claims

1. Motorized vehicle (1), comprising a front part (2) provided with at least one steering skid (21) intended to be steered by a handlebar (22), a rear part (3) comprising a frame (31) rigidly connected to a propulsion means (32) that is of the caterpillar type and is driven by a transmission mechanism (4) configured to be driven by a motor (5), the motor (5) being housed in a wheel (41) of the transmission mechanism (4) that forms a drive wheel of the propulsion means (32), the propulsion means (32) being supported by a bogie (8), the motorized vehicle being **characterized in that** the bogie has an upper bogie (81) rigidly connected to the frame (31) and a lower bogie (82), said bogies being connected together by a suspension mechanism (80), the lower bogie (82) having at least one degree of freedom with respect to the upper bogie (81), said wheel (41) of the transmission mechanism (4) that forms a drive wheel of the propulsion means (32) being rigidly connected to the lower bogie (82), at the rear thereof.

2. Motorized vehicle (1) according to claim 1, **characterized in that** it comprises a mechanical connection (6) for mechanically connecting the front part (2) to the rear part (3), the mechanical connection (6) being releasable.

3. Motorized vehicle (1) according to claim 2, **characterized in that** it comprises a gripping means (61) configured to allow the mechanical connection (6) to be manually assembled and disassembled.

4. Motorized vehicle (1) according to any of the preceding claims, **characterized in that** the motor (5) is a battery-powered electric motor.

5. Motorized vehicle (1) according to any of the preceding claims, **characterized in that** the front part (2) comprises a linkage (23) that forms a framework, the releasable mechanical connection (6) connecting the linkage (23) of the front part (2) to the frame (31) of the rear part (3).

6. Motorized vehicle (1) according to claim 5, **characterized in that** the front part (2) has a front arm (24), for example of the fork type, connected on one side to the steering skid (21) and on the other side to the handlebar (22), the linkage (23) being rigidly connected to the front arm (24) and configured so as to be removable and/or articulated in order to be foldable.

7. Motorized vehicle (1) according to any of the preceding claims, **characterized in that** the releasable mechanical connection (6) is articulated so as to provide a pivot connection with a horizontal axis extending transversely with respect to a reference longitudinal axis (L) of the vehicle.

8. Motorized vehicle (1) according to any of the preceding claims, **characterized in that** the handlebar (22) has means (220) for electrically controlling the motor (5) and **in that** the motorized vehicle (1) comprises an electrical connection device (7) between the front part (2) and the rear part (3).

9. Motorized vehicle (1) according to any of the preceding claims, **characterized in that** the rear part (3) is self-supporting.

10. Motorized vehicle (1) according to any of the preceding claims, **characterized in that** the degree of freedom of the lower bogie (82) with respect to the upper bogie (81) is preferably a rotation about an instantaneous axis of rotation, which is preferably located longitudinally with respect to the motorized vehicle (1) in a region located on a line with a contact surface of the propulsion means with the ground (S).

11. Motorized vehicle (1) according to any of the preceding claims, **characterized in that** in a stowed position, a combined measurement of a length and a circumference of the vehicle is less than or equal to 419 cm.

12. Motorized vehicle (1) according to any of the preceding claims, **characterized in that** the bogie is configured so that the caterpillar track is triangular, i.e., having three returns.

13. Motorized vehicle (1) according to any of the preceding claims, **characterized in that** the wheel (41) of the transmission mechanism (4), inside which wheel the motor (5) is housed, comprises, on its circumference, a plurality of cavities (411) separated by stiffeners (412), the stiffeners (412) preferably being inclined with respect to a radial direction of the wheel (41).

14. Motorized vehicle (1) according to any of the preceding claims, **characterized in that** the wheel (41) of the transmission mechanism (4), inside which wheel the motor (5) is housed, is supported by an axle connected to the lower bogie (82), at least one damping seal (413) being arranged between the axle of the wheel (41) and the lower bogie (82), preferably accompanied by at least one plate (414) of a harder material than the seal (413).

15. Motorized vehicle (1) according to any of the preceding claims, **characterized in that** the frame (31) has at least four oblong half-holes configured to receive portions, preferably located at the ends, of at least two axles supported by the bogie (8), preferably by the upper bogie (81).
